# EUROPÄISCHE PATENTSCHRIFT

(11) **EP 2 099 109 B1**
(45) Veröffentlichungstag und Bekanntmachung des Hinweises auf die Patenterteilung: **19.09.2012**
(21) Anmeldenummer: 09405039.0
(22) Anmeldetag: 02.03.2009
(51) Int. Cl.: H02G 13/00

(54) **Blitzschutzsystem**
Lightning protection system
Système antifoudre

(30) Priorität: 07.03.2008 CH 341082008
(43) Veröffentlichungstag der Anmeldung: 09.09.2009
(60) Teilanmeldung: 12002733.9
(73) Patentinhaber: Brugg Kabel AG, 5200 Brugg (CH)
(72) Erfinder: Steiner, Walter, 4566 Halten (CH); Kälin, Armin, 8340 Hinwil (CH)
(74) Vertreter: Roshardt, Werner Alfred

(56) Entgegenhaltungen:
- DE-A1- 1 557 383
- DE-C- 315 726
- US-A- 1 193 848
- US-A- 1 743 526
- US-A- 4 180 698

## Beschreibung

### Technisches Gebiet

Die Erfindung betrifft eine freistehende Blitzschutzanordnung zur Bildung eines Schutzvolumens auf einem Erdoberflächenbereich für ein im Schutzvolumen angeordnetes Objekt, insbesondere fliegende Bauten, umfassend wenigstens eine elektrisch leitende Blitzfangvorrichtung, welche das Objekt überragt und über wenigstens einen Ableiter mit einem Erdbereich elektrisch leitend verbunden ist. Des Weiteren betrifft die Erfindung einen Bausatz für eine freistehende Blitzschutzanordnung und die Verwendung des Bausatzes zum Schutz von Zeltbauten.

### Stand der Technik

Blitzeinschläge können an Bauwerken oder baulichen Anlagen unter Umständen grosse Personen- und/oder Sachschäden verursachen. Zur Verhinderung von Blitzeinschlägen werden Bauwerke daher an exponierten Lagen mit Blitzfangvorrichtungen versehen, welche als definierte Einschlagstellen für Blitze dienen.

Eine einfache Blitzfangvorrichtung bildet z. B. eine einzelne und vertikal auf einer baulichen Anlage angeordnete Blitzfangstange. Gemäss dem sogenannten Schutzwinkelverfahren bildet eine vertikale Blitzfangstange ein kegelförmiges Schutzvolumen, welches sich von der Spitze zur Erdoberfläche hin aufweitet. Objekte, welche sich in diesem kegelförmigen Schutzvolumen befinden, sind vor einem direkten Blitzeinschlag geschützt. Wie dem Fachmann hinlänglich bekannt, hängt der Öffnungswinkel des kegelförmigen Schutzvolumens insbesondere von der Höhe der Blitzfangstange und dem Gefährdungspegel ab.

Die bei einem Blitzeinschlag in die Blitzfangvorrichtung auftretenden Ströme werden dann über einen elektrischen Ableiter in den Erdbereich eingeleitet, wobei zur Einleitung der elektrischen Ströme aus dem Ableiter in den Erdbereich üblicherweise sogenannte Erder verwendet werden. Erder sind nicht-isolierte elektrische Leiter, welche als Kontaktfläche in den Erdbereich bzw. den leitfähigen Untergrund eingebracht sind und einen elektrischen Kontakt zwischen dem Ableiter und dem Erdbereich herstellen. Für fest installierte Bauwerke, wie beispielsweise Häuser, Brücken oder Türme, gibt es heute wirksame Fangeinrichtungen, Ableiter und Erdungsanlagen, welche einen effektiven Schutz der Bauwerke und der darin befindlichen Personen und Gegenstände bieten.

Für fliegende Bauten, d. h. bauliche Anlagen, welche dazu geeignet und bestimmt sind, wiederholt aufgestellt und abgebaut und/oder zerlegt zu werden, existieren bis heute jedoch kaum befriedigende Lösungen.

In der DE 20 2005 009 590 U1 ist eine Blitzableitervorrichtung in Form eines Mastes mit einer Blitzfangstange beschrieben, welche beispielsweise zum Schutz von mobilen Einrichtungen wie Zelten vorgesehen ist. Dabei wird die zu schützende Einrichtung im Schutzkegel der Blitzfangstange angeordnet. Bei mehreren oder grösseren mobilen Einrichtungen werden entsprechend mehrere Blitzableitervorrichtungen vorgesehen. Der Blitzstrom wird von der Blitzfangstange über einen elektrisch isolierten Leiter parallel entlang des Masts nach unten geführt. Im unteren Bereich des Masts ist der Ableiter umgelenkt und verläuft, von mehreren Distanzhaltern getragen, in horizontaler Richtung vom Mast weg oberhalb der Erdoberfläche. In einer Entfernung von ca. 10 m vom Mast ist der Leiter mit einem Tiefenerder verbunden, welcher den Blitzstrom aus dem Leiter in den Erdbereich einleitet.

Eine derartige Anordnung verhindert zwar einen direkten Blitzeinschlag in die im Schutzkegel angeordnete und zu schützende Einrichtung bestmöglich. Zum Zeitpunkt des Blitzeinschlags besteht aber ein vom Einschlagspunkt bzw. vom Erder aus sich im Erdbereich ausbreitendes trichterförmiges Potentialgefälle bzw. ein Potentialtrichter. Eine sich im Bereich dieses Spannungstrichters bewegende Person greift damit die so genannte Schrittspannung ab. Die Schrittspannung entspricht definitionsgemäss dem Teil des Erdoberflächenpotentials, welcher von einer Person in einem Schritt von 1 m Länge überbrückt werden kann. Im ungünstigsten Fall kann die Schrittspannung bis zu mehreren hundert Volt betragen, was für eine Person tödlich sein kann. Aber auch elektrische Geräte, welche sich im Einflussbereich des Spannungstrichters befinden, können, ohne direkt vom Blitz getroffen zu werden, stark beschädigt werden.

Gerade für fliegende Bauten, wie z. B. Zelte, Tribünen, Verkaufsstände oder Spezialfahrzeuge, welche zeitweilig betriebsmässig ortsfest benutzt werden, ist dies von grossem Nachteil. Personen, welche sich im Bereich derartiger Bauten aufhalten oder darin arbeiten, müssen je nach Witterungslage, z. B. bei Gewitterneigung, aus Sicherheitsgründen einen geschützten Ort aufsuchen und empfindliche elektrische Geräte müssen in Sicherheit gebracht werden. Dies ist in jedem Fall umständlich und verringert den Nutzen von fliegenden Bauten entsprechend.

Es besteht daher nach wie vor Bedarf nach verbesserten Blitzschutzanordnungen, welche insbesondere für fliegende Bauten geeignet sind.

### Darstellung der Erfindung

Aufgabe der Erfindung ist es daher, eine dem eingangs genannten technischen Gebiet zugehörende Blitzschutzanordnung zu schaffen, welche sich in einfacher Weise installieren lässt und insbesondere für fliegende Bauten einen verbesserten Schutz vor Blitzeinschlägen bietet.

Die Lösung der Aufgabe ist durch die Merkmale des Anspruchs 1 definiert. Gemäss der Erfindung ist ein auf dem Erdoberflächenbereich aufliegender und geerdeter elektrischer Ringleiter vorgesehen, welcher das Objekt in der Art einer Potentialsteuerung umgibt, wobei der Ringleiter mit dem Ableiter elektrisch leitend verbunden ist.

Es hat sich gezeigt, dass ein auf der Erdoberfläche aufliegender elektrischer und geerdeter Ringleiter, welcher um das zu schützenden Objekt herum angeordnet ist und mit dem Ableiter elektrisch verbunden ist, eine effektive Potentialsteuerung bildet. Die Potentialsteuerung bzw. der elektrische Ringleiter sorgt dafür, dass sich das Eroberflächenpotential im gesamten vom elektrischen Ringleiter umgebenen Bereich überall den gleichen Wert hat bzw. ein Potentialausgleich erfolgt. Damit bestehen innerhalb der Potentialsteuerung keine Potentialunterschiede und es ist somit sichergestellt, dass die Schrittspannung in diesem Bereich nahezu gleich Null ist. Im Moment des Blitzeinschlags kann sich das Erdoberflächenpotential zwar erhöhen, da die Zunahme aber überall im vom Ringleiter bzw. der Potentialsteuerung umgebenen Bereich gleich stark ist, kann sich eine Person gefahrlos in diesem Bereich aufhalten und darin befindliche elektrische Geräte werden ebenfalls geschützt. Elektrische Geräte können zudem mit üblichen Überspannungsschutzmassnahmen geschützt werden.

Ein auf dem Erdoberflächenbereich aufliegender elektrischer Ringleiter lässt sich insbesondere in einfacher Weise installieren. Nachdem dieser in geeigneter Weise um das zu schützende Objekt herum ausgelegt wurde, muss dieser lediglich noch geerdet und mit dem Ableiter elektrisch verbunden werden. Es reicht dabei, den elektrischen Ringleiter punktuell zu erden. Als Erder sind z. B. Erdnägeln bzw. Heringe geeignet, welche im Erdbereich verankert werden. Durch die Erdnägel kann der auf der Erdoberfläche aufliegende elektrische Ringleiter auch bezüglich seiner Lage auf der Erdoberfläche direkt mechanisch fixiert werden, so dass eine versehentliche Verschiebung durch eine Person verhindert wird. Indem der elektrische Ringleiter auf der Erdoberfläche aufliegend angeordnet wird, entfallen insbesondere aufwändige bauliche Massnahmen.

Die erfindungsgemässe Blitzschutzanordnung ist freistehend ausgebildet, d. h. sie ist nicht am zu schützenden Objekt befestigt und kommt auch nicht mit diesem in Berührung. Da die Blitzschutzanordnung eigenständig stabil ist, müssen am zu schützenden Objekt auch keine besonderen Haltevorrichtungen für die Blitzschutzanordnung vorliegen und in Bezug auf die Stabilität oder die Belastbarkeit des schützenden Objekts bestehen keine speziellen Anforderungen. Die erfindungsgemässe Blitzschutzanordnung kann daher prinzipiell zum Schutz von unterschiedlichsten Objekten ausgelegt werden. Hierbei ist es lediglich notwendig, das mit der Blitzschutzanordnung erzeugte Schutzvolumen an das zu schützende Objekt anzupassen, indem beispielsweise der Umfang des elektrischen Ringleiters oder die Höhe der Blitzfangvorrichtung entsprechend modifiziert werden.

Die freistehende Konstruktion der Blitzschutzanordnung ist aber auch bei der Montage von Vorteil. Die Blitzschutzanordnung kann nämlich unabhängig vom zu schützenden Objekt installiert werden. So ist es beispielsweise möglich, dass die Blitzschutzanordnung bereits installiert wird, während das zu schützende Objekt, z. B. ein Zelt und/oder ein Spezialfahrzeug, erst nachträglich in der Blitzschutzanordnung aufgebaut und/oder eingebracht wird. Dies ermöglicht im Besonderen eine flexible Verwendung der erfindungsgemässen Blitzschutzanordnung.

Durch die elektrische Verbindung des Ableiters mit dem geerdeten elektrischen Ringleiter wird ein optimaler Potentialausgleich zwischen Ableiter und elektrischem Ringleiter bzw. der Potentialsteuerung erzielt. Damit ist sichergestellt, dass die elektrischen Potentialunterschiede im gesamten Schutzvolumen nahezu gleich Null sind und das zu schützende Objekt bestmöglich vor den Auswirkungen des Blitzeinschlags geschützt sind.

Die elektrische Verbindung des Ableiters mit dem geerdeten elektrischen Ringleiter verbessert zudem die elektrische Verbindung zwischen Ableiter und Erdbereich. Ist der elektrische Ringleiter an mehreren Orten geerdet, stehen zur Ableitung des Blitzstromes nämlich mehrere Strompfade zur Verfügung. Sollte der spezifische Erdwiderstand in einem Bereich sehr hoch sein, besteht somit die Möglichkeit, dass der Blitzstrom in einen anderen Erdbereich abfliessen kann, welcher über eine bessere Leitfähigkeit verfügt. Dies stellt sicher, dass der so genannte Stosserdungswiderstand zwischen dem Ableiter und dem Erdbereich insgesamt möglichst gering ausfällt und der Blitzstrom bestmöglich abfliessen kann.

Die erfindungsgemässe Blitzschutzanordnung kann ohne aufwändige Installationsarbeiten und/oder ohne bauliche Anpassungen in einfacher Weise an den unterschiedlichsten Orten installiert werden und bietet dennoch einen bestmöglichen Schutz vor den Auswirkungen eines Blitzeinschlags.

Bevorzugt ist der Ringleiter ein Kupferseil, wobei eine elektrisch leitende Querschnittsfläche des Kupferseils insbesondere wenigstens gleich 16 mm² ist. Seile sind allgemein relativ flexibel und lassen sich daher in nahezu jeder gewünschten Anordnung um das zu schützende Objekt herum auf der Erdoberfläche anbringen. Kreisförmige, ovale oder rechteckige Anordnungen sind dabei problemlos möglich. Zudem können die flexiblen Seile auch einer unebenen Topographie folgen und bleiben so entlang ihrer gesamten Länge in Kontakt mit der Erdoberfläche, was für eine effektive Potentialsteuerung von Vorteil ist. Grundsätzlich ist es beispielsweise auch denkbar Drähte oder Profilschienen als elektrische Ringleiter zu verwenden. Diese sind aber meist relativ starr und daher insbesondere bei unebener Topographie aufwändiger zu verlegen.

Kupfer als Material ist neben Silber eines der elektrisch bestleitenden Metalle, welches zudem eine hohe Korrosionsbeständigkeit und mechanische Festigkeit aufweist. Seile aus Kupfer sind daher ausreichend flexibel, gleichzeitig aber in allen Belangen auch äusserst robust und entsprechend auch unter widrigen Bedingungen einsetzbar. Es ist auch möglich, andere anstelle von Kupfer Materialien zu verwenden. So können auch z. B. Stähle verwendet werden. Allerdings weisen diese eine geringere Leitfähigkeit auf und unedlen Stähle sind zudem äusserst oxidationsanfällig.

Ein Kupferseil mit einer elektrisch leitenden Querschnittsfläche von wenigstens 16 mm² bietet zudem eine ausreichend grosse elektrische Leitfähigkeit, so dass die bei Blitzeinschlägen auftretenden Ströme ohne übermässige Hitzentwicklung abgeleitet werden können. Kleinere Leitungsquerschnitte sind zwar auch möglich. Je kleiner der Leitungsquerschnitt desto grösser wird der elektrische Widerstand und die Hitzeentwicklung beim Durchfluss des Blitzstroms. Im Extremfall treten Schmelz-und/oder Verdampfungsvorgänge auf. Zu grosse Seildurchmesser sollten ebenfalls vermieden werden, da in diesem Fall insbesondere die Flexibilität des Kupferseils abnimmt, was unerwünscht ist.

Insbesondere umfasst die Blitzfangvorrichtung einen vertikalen Mast, wobei der Mast insbesondere telekopierbar ist und an einem oberen Ende eine Blitzfangstange, bevorzugt in Form eines Aluminiumstabs, angeordnet ist. Mit einem Mast lässt sich insbesondere eine hohe Blitzfangvorrichtungen realisieren, welche zudem in einfacher Weise installiert werden kann. Damit können auch relativ hohe Objekte geschützt werden. Falls der Mast telekopierbar bzw. in der Länge veränderbar ist, kann er zudem zu Transportzwecken auf eine relativ kurze Länge eingefahren werden, was den Transportaufwand reduziert. Zudem kann ein teleskopierbarer Mast an unterschiedlich hohe zu schützenden Objekte oder an Bodenunebenheiten angepasst werden. Dabei sind insbesondere stufenlose Teleskopmechanismen vorteilhaft.

Blitzfangstangen aus Aluminium sind insbesondere korrosionsbeständig und weisen eine geringe Dichte auf. Prinzipiell können aber auch Blitzfangstangen aus einem anderen Metall, wie z. B. Kupfer oder Stahl, verwendet werden.

Der Mast der Blitzfangvorrichtung kann beispielsweise aus Kunststoff oder aus Metall bestehen. Insbesondere bei einem Mast aus Metall kann der Blitzstromes direkt über den Mast in den Erdbereich eingeleitet werden. Der Mast dient in diesem Fall auch als Ableiter. Insbesondere bei einem Mast aus Kunststoff ist es von Vorteil, einen elektrischen Leiter als Ableiter vorzusehen, um eine optimale Ableitung des Blitzstromes zu erreichen. Als Ableiter ist beispielsweise ein elektrisches Kabel geeignet, welches entlang dem Mast nach unten geführt wird und über eine elektrische Isolation verfügen kann. Auch möglich ist, wie nachstehend noch genauer ausgeführt wird, eine Ableitung über Abspannseile.

Es ist aber beispielsweise auch möglich, als Blitzfangeinrichtung ein Dreibein aus einem elektrisch leitenden Material vorzusehen, wobei an einem oberen Ende des Dreibeins bevorzugt eine Blitzfangstange, insbesondere aus Aluminium, angeordnet ist. Ein Dreibein bietet gegenüber einem Mast im Allgemeinen eine verbesserte Stabilität. Zur Höhenverstellung und/oder Anpassung an Bodenunebenheiten oder eine Bodenneigung können die einzelnen Beine beispielsweise telekopierbar ausgebildet sein.

Mit Vorteil umfasst die Blitzfangvorrichtung als Ableiter wenigstens drei mit der Blitzfangstange elektrisch verbundene und elektrisch leitende Abspannseile am wenigstens einen Mast, wobei die elektrisch leitenden Abspannseile schräg nach unten geführt und vom Mast beabstandet im Erdbereich elektrisch leitend verankert sind. Die Abspannseile sind dabei zur Leitung von Blitzströmen ausgelegt. Durch derartige elektrisch leitende Abspannseile kann einerseits der Mast in einfacher Weise abgespannt und stabilisiert werden. Andererseits liegen durch das Anbringen an der Blitzfangstange wenigstens drei elektrisch parallel geschaltete Ableiter vor, welche den Blitzstrom in den Erdbereich einleiten. Insbesondere bei einem elektrisch leitenden Mast bildet der Mast selbst einen weiteren Strompfad. Zur Einleitung in den Erdbereich können insbesondere Tiefenerder von Vorteil sein. Tiefenerder ragen 1 - 3 Meter in den Erbereich, womit gleichzeitig eine mechanisch stabile Verankerung und eine optimale elektrische Verbindung zwischen Tiefenerder und Erbereich vorliegen. Vom Einschlagpunkt des Blitzes im Bereich der Blitzfangstange führen somit wenigstens drei parallele Strompfade zum Erdbereich, wodurch der Blitzstrom aufgeteilt wird. Die Aufteilung des Blitzstroms führt insbesondere zu kleineren Potentialtrichtern im Bereich der Erder, womit die Potentialunterschiede bzw. die Schrittspannung reduziert werden.

Die Abspannseile können direkt an der Blitzfangstange befestigt werden. Damit kann in einfacher Weise ein elektrischer Kontakt zwischen der Blitzfangstange und den Abspannseilen hergestellt werden. Es ist aber auch möglich die Abspannseile weiter unten am Mast zu befestigen. Aus mechanischer Sicht kann je nach Länge und Steifheit des Masts eine Befestigung der Abspannseile am oberen Ende oder eine Befestigung weiter unten von Vorteil sein.

Es kann in der Praxis aber auch vorteilhaft sein, einen gegenüber der Blitzfangstange elektrisch isolierten Mast, welcher z. B. aus Kunststoff besteht, vorzusehen und elektrisch leitende Abspannseile an der Blitzfangstange anzubringen. Damit werden Blitzströme ausschliesslich über die Abspannseile abgeführt. Die Abspannseile können dabei gegen aussen auch elektrisch isoliert sein, z. B. durch Anbringen einer isolierenden Ummantelung.

Besonders geeignete elektrisch leitende Abspannseile weisen einen Kern aus Kupfer auf, welcher von verseilten Stahldrähten umgeben ist, wobei eine elektrisch leitende Querschnittsfläche des Kerns aus Kupfer insbesondere wenigstens 10 mm² misst. Der Kern aus Kupfer weist damit eine zur Ableitung von Blitzströmen ausreichende elektrische Leitfähigkeit auf. Die um den Kern aus Kupfer herum angeordneten Stahldrähte verleihen den Abspannseilen eine verbesserte Festigkeit. Grundsätzlich ist es auch denkbar, ein reines Kupferseil zu verwenden, allerdings müsste dann der Seilquerschnitt entsprechend vergrössert werden, um eine gleichwertige Festigkeit zu erhalten. Derartige Kupferseile sind aber unhandlich und daher weniger geeignet. Zur Verbesserung der Festigkeit ist es auch möglich anstelle oder zusätzlich zu den Stahlseilen, nicht-metallische Werkstoffe, wie z. B. Kevlar, Karbonfasern oder dergleichen, in den Abspannseilen vorzusehen.

Ebenso ist es möglich, die elektrisch leitenden Abspannseile isoliert auszubilden. In diesem Fall können beispielsweise die vorstehend beschriebenen Abspannseile mit einem elektrisch leitenden Kern aus Kupfer und darum herum verseilten Stahldrähten mit einer zusätzlichen Isolationsschicht, z. B. einem Kunststoff, versehen werden.

Bei grösseren zu schützenden Objekten hat es sich als zweckdienlich erwiesen, wenigstens zwei räumlich getrennte Blitzfangvorrichtungen vorzusehen. Damit kann das durch die Blitzschutzanordnung gebildete Schutzvolumen vergrössert werden. Hierbei ist aber zu beachten, dass die beiden Blitzfangvorrichtungen nicht zu weit voneinander beabstandet angeordnet werden. Es ist in jedem Fall sicherzustellen, dass die Schutzbereiche, welche von den einzelnen Blitzfangvorrichtungen gebildet werden, einander wenigstens teilweise durchdringen und ein gemeinsames und zusammenhängendes Schutzvolumen bilden. Das zu schützenden Objekt muss vollständig innerhalb dieses Schutzvolumens vorliegen. Werden z. B. Blitzfangvorrichtungen in Form von vertikalen Masten mit aufgesetzten Blitzfangstangen verwendet, bildet jeder vertikale Mast einen sich von der Blitzfangstange zur Erdoberfläche hin aufweitenden kegelförmigen Schutzbereich. Diese kegelförmigen Schutzvolumen müssen sich daher wenigstens teilweise durchdringen.

Die Anzahl, der Abstand und die Dimensionierung der Blitzfangvorrichtungen werden mit Vorteil entsprechend der Norm IEC/EN 62305-1...4 definiert (Diese gilt zwar für Blitzfangvorrichtung an festen Bauten, macht bei freistehenden Blitzschutzanordnungen aber auch Sinn).

Bevorzugt sind die wenigstens zwei, räumlich getrennten Blitzfangvorrichtungen in einem Bereich eines oberen Endes mit wenigstens einem elektrisch leitenden Fangseil, insbesondere einem Kupferseil, elektrisch verbunden. Das Fangseil verläuft dabei insbesondere im Wesentlichen in horizontaler Richtung. Durch diese Massnahme wird das erzeugte Schutzvolumen vergrössert. Bei zwei Blitzfangvorrichtungen in Form von vertikalen Masten mit kegelförmigen Schutzbereichen, können so z. B. zeltförmige Schutzvolumen erzeugt werden. Dies hat beispielsweise den Vorteil, dass sich die beiden vertikalen Masten weiter voneinander beabstandet anordnen lassen, da das teilweise Durchdringen der kegelförmigen Schutzvolumen der einzelnen Masten nun nicht mehr unbedingt erforderlich ist. Das Fangseil, welches ebenfalls als Blitzfangvorrichtung wirkt, bildet dabei ein zeltdachförmiges Schutzvolumen, welches die beiden kegelförmigen Schutzvolumen der beiden vertikalen Masten verbindet. Bei mehr als zwei Blitzfangvorrichtungen können durch zusätzliche Fangseile auch kompliziertere und auf bestimmte zu schützende Objekte angepasste Schutzvolumen erzeugt werden. Im Prinzip könnte anstelle des Fangseils oder in Kombination mit diesem auch Fangdrähte und/oder Fangstangen verwendet werden.

In diesem Zusammenhang kann es auch vorteilhaft sein, ein Fangseil zwischen den wenigstens zwei räumlich getrennten Blitzfangvorrichtungen mechanisch zu stützen. Hierfür kann beispielsweise eine elektrisch isolierte Stützvorrichtung wie z. B. ein Stützmast verwendet werden. Die Stützvorrichtung kann z. B. aus einem Kunststoff, insbesondere einem faserverstärkten Kunststoff, bestehen. Bevorzugt verfügt die Stützvorrichtung an ihrem oberen Ende über eine Blitzfangstange, welche mit dem Fangseil elektrisch leitend verbunden ist. Zur Stabilisierung können an der Stützvorrichtung Abspannseile angebracht werden, welche aber rein der mechanischen Abspannung dienen.

Geeignet sind z. B. die vorstehend beschriebenen Abspannseile, mit oder ohne Isolationsschicht.

Derartige Stützvorrichtungen oder Stützmasten können im Schutzvolumen selbst angeordnet werden, wobei aber insbesondere darauf zu achten ist, dass zwischen dem oberen Ende der Stützvorrichtung bzw. dem Stützmast und/oder der Blitzfangstange keine elektrische Verbindung zum Erdreich besteht. Ansonsten werden Blitzströme direkt in das Erdreich im Schutzvolumen geleitet, was unter Umständen gefährliche elektrische Potentialunterschiede im Schutzvolumen hervorruft.

Durch die Verwendung von Stützvorrichtungen oder Stützmasten kann die Blitzschutzanordnung insgesamt stabiler ausgebildet werden.

Insbesondere verläuft das wenigstens eine elektrisch leitende Fangseil in einem Bereich oberhalb des zu schützenden Objekts. Damit wird eine optimale Schutzwirkung für das zu schützende Objekt erhalten.

Mit Vorteil sind mehrere Fangseile angeordnet, welche z. B. oberhalb des zu schützenden Objekts eine netzartige Struktur bilden. Dabei liegt eine grösste Maschenweite von höchstens 20 × 20 m, insbesondere von höchstens 5 × 5 m, vor. Bei einer Maschenweite von 20 × 20 m ist z. B. sichergestellt, dass kein Punkt der oberhalb des zu schützenden Objekts weiter als 10 m von einem Fangseil, bzw. einer Blitzfangeinrichtung entfernt ist. Damit wird bereits eine hohe Einfangwirksamkeit erzielt, so dass das Risiko eines Blitzeinschlags in das zu schützenden Objekt als sehr gering eingestuft werden kann. Die Einfangwirksamkeit entspricht dabei dem Anteil der Blitzeinschläge, welcher durch die Fangseile und/oder Blitzfangvorrichtungen sicher beherrschbar sind. Bei einer Maschenweite von 5 × 5 m ist entsprechend kein Punkt oberhalb des zu schützenden Objekts weiter als 2.5 m von einem Fangseil, bzw. einer Blitzfangeinrichtung entfernt. Damit ist eine noch grössere Einfangwirksamkeit verbunden, so dass ein Blitzeinschlag in das zu schützende Objekt äusserst unwahrscheinlich ist.

Grundsätzlich können auch noch engeren Maschenweiten vorgesehen werden, um die Einfangwirksamkeit noch weiter zu steigern. Der Material- und Installationsaufwand nimmt dann aber unverhältnismässig zu. Grössere Maschenweiten als 20 × 20 m sind zwar denkbar, führen aber zu einer geringeren Einfangwirksamkeit und einem entsprechend höheren Risiko eines Blitzeinschlags.

Mit Vorteil weist die Blitzfangvorrichtung eine Höhe von maximal 10 m, insbesondere von maximal 8 m auf. Es hat sich gezeigt, dass bei höheren Blitzschutzvorrichtungen, ohne zusätzliche Massnahmen, das Risiko für z. B. überspringende Sekundärblitze stark zunimmt, so dass das zu schützenden Objekt seitlich durch einen Blitz getroffen werden kann. Zudem können Blitzschutzvorrichtungen mit einer Höhe von 10 m, z. B. Masten oder Dreibeine, bei ausreichender Stabilität relativ leicht ausgebildet sein, so dass sie von einer oder mehreren Personen gut handhabbar sind. Eine Installation ist daher auch ohne zusätzliches schweres Gerät, wie z. B. ein Kran oder dergleichen, problemlos möglich. Des Weiteren lassen sich derartige dimensionierte Blitzschutzvorrichtungen auch gut transportieren. Bei einer Höhe von maximal 8 m sind die erwähnten Vorteile noch deutlicher ausgeprägt.

Es hat sich zudem als vorteilhaft erwiesen, ein gitterartiges Metallgerüst, bestehend aus mehreren miteinander verbundenen Metallstäben, einzusetzen, welches als Blitzfangvorrichtung und Ableiter dient, wobei das Metallgerüst das zu schützende Objekt oberhalb des Erdoberflächenbereichs berührungslos und beabstandet umgibt und wobei das Metallgerüst insbesondere einer äusseren Form des zu schützenden Objekts angepasst ist. Das gitterartige Metallgerüst ist freistehend, eigenstabil und kann daher das zu schützende Objekt berührungslos umgeben, was die Sicherheit erhöht. Aufgrund der berührungslosen und beabstandeten Anordnung des Metallgerüsts ist es auch möglich, im Innern des zu schützenden Objekts z. B. elektrische Leitungen und/oder Verbraucher an beliebeigen Stellen anzubringen. Die Gefahr eines Blitzeinschlags und/oder einer Blitzableitung durch die elektrischen Leitungen und/oder Verbraucher besteht somit nicht. Es ist aber insbesondere auf einen ausreichenden Trennungsabstand zwischen dem Metallgerüst und den elektrischen Leitungen und/oder Verbrauchern zu achten, da ansonsten die Gefahr eines induktiven Spannungsabfalls besteht. Aufgrund des Spannungsabfalls kann es dann zu einem Durchschlag auf die elektrischen Leitungen und/oder Verbraucher kommen. Der Abstand zwischen dem zu schützenden Objekt und dem Metallgerüst beträgt Idealerweise wenigstens 1 m.

Die einzelnen Metallstäben können dabei ineinander steckbar ausgebildet sein, so dass das gitterartige Metallgerüst in einfacher Weise auf- und abgebaut werden kann. Dabei sind zur Verbindung und/oder Sicherung der Metallstäbe z. B. spezielle Verbindungsmuffen, Splinte oder Schnappverbinder geeignet. Das gitterartige Metallgerüst kann beispielsweise durch ein elektrisches Kabel mit dem auf dem Erdoberflächenbereich aufliegenden elektrischen Ringleiter verbunden werden.

Die Anpassung des gitterartigen Metallgerüsts an die äussere Form des zu schützenden Objekts stellt insbesondere sicher, dass das zu schützende Objekt in definierter Lage vollständig innerhalb des Metallgerüsts angeordnet werden kann. Ein Vorstehen von exponierten Bereichen, z. B. Ecken oder Kanten, des zu schützenden Objekts kann so bestmöglich verhindert werden. Zudem reduziert eine Anpassung des gitterartigen Metallgerüsts an die äussere Form des zu schützenden Objekts den Blatzbedarf für die Blitzschutzanordnung. Damit kann die Blitzschutzanordnung auch bei relativ engen Platzverhältnissen eingesetzt werden.

Prinzipiell ist es aber auch möglich, ein gitterartiges Metallgerüst beispielsweise im Innern von fliegenden Bauten, insbesondere in einem Zelt, vorzusehen. Das Schutzvolumen beschränkt sich in diesem Fall auf den vom Metallgerüst umgebenen Bereich im Innern der fliegenden Bauten. Damit ein direkter Blitzeinschlag in die fliegenden Bauten bestmöglich verhindert wird, können am gitterartigen Metallgerüst Fangstangen angebracht werden, welche, insbesondere in vertikaler Richtung, aus den fliegenden Bauten herausragen. Ohne derartige Fangstange besteht die Gefahr, dass die fliegenden Bauten von einem einschlagenden Blitz getroffen und beschädigt werden. Bei dieser Anordnung ist die Einhaltung eines ausreichenden Trennungsabstands zwischen dem Metallgerüst und den elektrischen Leitungen und/oder Verbrauchern essentiell.

Eine grösste Gittermasche des Gitters beträgt vorzugsweise höchstens 20 × 20 m, insbesondere höchstens 5 × 5 m. Die Vorteile derartig dimensionierter Gittermaschen entsprechen den bereits vorstehen diskutierten Vor- und Nachteile der entsprechenden Maschenweiten der netzartigen Strukturen aus Fangseilen.

Führen eine oder mehrere elektrische Versorgungsleitungen, insbesondere Stromversorgungs-, Daten-, Kommunikations- und/oder Antennenleitungen, in das oder zu dem zu schützenden Objekt, werden diese insbesondere über genau eine mobile und zentrale Einspeisevorrichtung in das Schutzvolumen geführt, wobei die zentrale Einspeisevorrichtung in einem wasserdichten und transportablen Gehäuse über Strom-und/oder Überspannungsschutzvorrichtungen für die elektrischen Versorgungsleitungen verfügt. Dies ist wichtig, da ein Blitz grundsätzlich auch in eine Versorgungsleitung ausserhalb des Schutzvolumens der Blitzschutzanordnung einschlagen kann. Ohne zentrale Einspeisevorrichtung würde dies zur Gefahr für das zu schützende Objekt und die darin befindlichen Personen und Geräte werden, da z. B. über die Versorgungsleitung hohe Ströme direkt in das zu schützende Objekt gelangen können. Aufgrund der Strom-und/oder Überspannungsschutzvorrichtungen wird dies jedoch verhindert und die Ströme werden in die Erdungseinrichtungen abgeleitet.

Die zentrale Einspeisevorrichtung mit Strom- und/oder Überspannungsschutzvorrichtungen ist insbesondere in einem wasserdichten und transportablen Gehäuse mit wenigstens einer Steckerbuchse angeordnet, wobei das Gehäuse insbesondere mit Traggriffen versehen ist und über eine Erdungsleitung verfügt. Damit ist die zentrale Einspeisevorrichtung grundsätzlich freistehend, so dass sie an einer beliebigen Stelle ausserhalb des elektrischen Ringleiters angeordnet werden kann und vor Witterungseinflüssen geschützt ist. Ein zusätzlicher Witterungsschutz oder Befestigungsvorrichtungen für die zentrale Einspeisevorrichtung sind somit nicht notwendig. Aufgrund der Traggriffe kann die Platzierung der zentralen Einspeisevorrichtung z. B. durch eine oder mehrere Personen erfolgen. Die im Gehäuse eingebrachten Steckerbuchsen ermöglichen zudem ein einfaches Ein- und Ausstecken der Versorgungsleitungen. Komplizierte und fehleranfällige elektrotechnische Installationen sind nicht erforderlich. Die Steckerbuchsen für die verschiedenen Versorgungsleitungen werden dabei mit Vorteil unterschiedlich ausgebildet, so dass eine eindeutige Zuordnung erfolgt. Dies stellt insbesondere einen Schutz vor Fehlmanipulationen dar und vereinfacht die Installation.

Das zu schützende Objekt weist bevorzugt allseitig einen Abstand von wenigstens 1 m zu den Bestandteilen der Blitzschutzanordnung bzw. der Blitzfangvorrichtung, dem Ableiter, dem Ringleiter, der Abspann- und der Fangseile auf. Damit wird verhindert, dass bei einem Blitzeinschlag Sekundärblitze auf das zu schützende Objekt überspringen. Geringere Abstände als 1 m sind zwar grundsätzlich möglich, das Risiko von Sekundärblitzen nimmt dann aber stark zu. In diesem Fall ist sicherzustellen, dass beispielsweise keine elektrischen Installationen oder Geräte in der Nähe der Blitzfangeinrichtung und/oder des Ableiters vorliegen. Grössere Abstände sind auch möglich. Je grösser der Abstand zum zu schützenden Objekt desto grösser wird aber die gesamte Blitzschutzanordnung.

Zur Bildung einer freistehenden Blitzschutzanordnung hat sich ein Bausatz als zweckdienlich erwiesen, welcher wenigstens eine frei aufstellbare Blitzfangvorrichtung mit einem Ableiter sowie einen Ringleiter in Form einer elektrisch leitenden Seilschlaufe zur Anordnung auf einem Erdoberflächenbereich umfasst. Der Bausatz ist dabei bevorzugt auf ein bestimmtes zu schützendes Objekt, z. B. auf einen speziellen Typ eines militärischen Zelts, zugeschnitten. Daher sind die wenigstens eine frei aufstellbare Blitzfangvorrichtung und der Ringleiter bevorzugt so dimensioniert, dass ein für das bestimmte zu schützenden Objekt optimales Schutzvolumen erzeugbar ist, welches das zu schützenden Objekt vollständig umfasst, gleichzeitig aber nicht unnötig Platz beansprucht. Dem Bausatz wird insbesondere auch eine Beschreibung beigelegt, welche exakte Anweisungen zum Aufbau der Blitzschutzanordnung enthält. Dies verbessert die Sicherheit, da das Risiko von fehlerhaften Anordnungen reduziert wird.

Bevorzugt enthält der Bausatz zusätzlich elektrisch leitende und für die wenigstens eine Blitzfangvorrichtung abgelängte Abspannseile, wobei die Abspannseile zur Befestigung an der wenigstens einen Blitzfangvorrichtung und/oder in einem Bodenbereich endseitig angeordnete Verbindungsvorrichtungen aufweisen. Aufgrund der Verbindungsvorrichtungen können die Abspannseile in einfacher Art und Weise an der Blitzfangvorrichtung befestigt werden. Mit Vorteil wird die Verbindungsvorrichtung so ausgebildet, dass die Abspannseile in ausschliesslich in definierter und eindeutiger Anordnung an der Blitzfangvorrichtung und/oder im Bodenbereich befestigbar sind.

Insbesondere enthält der Bausatz mehrere Blitzfangvorrichtungen und weist zusätzlich wenigstens ein konfektioniertes Fangseil zur Verbindung der mehreren Blitzfangvorrichtungen auf, wobei das wenigstens eine Fangseil zur Befestigung an den Blitzfangvorrichtungen endseitig angeordnete Befestigungsvorrichtungen aufweist. Die Befestigungsvorrichtungen sind vorteilhafterweise ebenfalls so ausgebildet, dass diese nur in definierter und eindeutiger Anordnung an den Blitzfangvorrichtungen befestigbar sind.

Bevorzugt umfasst der Bausatz zusätzlich Verankerungsmittel, insbesondere Erdanker für die Blitzfangvorrichtung und/oder den Ringleiter.

Mit Vorteil liegt der Bausatz in einem oder in mehreren Transportbehältern vor. Damit lässt sich der Bausatz in einfacher Weise transportieren, wobei er gleichzeitig vor Beschädigungen geschützt ist.

Bei den vorstehend beschriebenen Teilen der Blitzschutzanordnungen, welche über Befestigungsmittel verfügen, sind diese mit Vorteil als unverlierbare Befestigungsmittel ausgebildet. Unter unverlierbaren Befestigungsmitteln werden solche verstanden, welche sich nicht von selbst, z. B. durch Vibrationen, lösen können. Dies ist beim Transport von entscheidendem Vorteil, da derartige Befestigungsmittel nicht verloren gehen können.

Besonders geeignet ist die erfindungsgemässe Blitzschutzanordnung bzw. der Bausatz daher zum Schutz von militärischen Zelten, welche meist über eine Vielzahl von empfindlichen elektronischen Geräten verfügen und über längere Zeit ortsfest betrieben werden müssen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Blitzfangvorrichtung in Form eines telekopierbaren Masts mit aufgesetzter Blitzfangstange und daran befestigten und elektrisch leitenden Abspannseilen in einer Seitenansicht;
- Fig. 2: einen Seilquerschnitt durch ein Abspannseil aus Fig. 1;
- Fig. 3: eine Seitenansicht eines Dreibeins mit aufgesetzter Blitzfangstange;
- Fig. 4: eine Seitenansicht eines Zelts, welches zwischen zwei durch ein Fangseil verbundenen Blitzfangvorrichtungen gemäss Fig. 1 angeordnet ist und auf der Eroberfläche von einem elektrischen Ringleiter umgeben ist.
- Fig. 5: eine Aufsicht von oben auf die Anordnung aus Fig. 4;
- Fig. 6: eine weitere Ansicht auf die Anordnung aus Fig. 4 von vorne;
- Fig. 7: eine perspektivische Darstellung einer Anordnung aus vier in einem Rechteck um ein Zelt angeordnete Blitzfangvorrichtung gemäss Fig. 1, wobei die Blitzfangvorrichtungen oberhalb des Zelts über netzartige angebrachte Fangseile miteinander verbunden sind und das Zelt auf der Erdoberfläche von zwei konzentrischen elektrischen Ringleitern umgeben ist;
- Fig. 8: ein Zelt, welches von einem gitterartigen Metallgerüst und auf der Erdoberfläche von einem elektrischen Ringleiter umgeben ist;
- Fig. 9: eine Stützvorrichtung in einer Seitenansicht mit einer isolierten Blitzfangstange und isolierten Abspannseilen;
- Fig. 10: einen Seilquerschnitt durch ein isoliertes Abspannseil aus Fig. 9;

- Fig. 11: eine Variante der Anordnung aus Fig. 7, wobei insbesondere die netzartig angebrachten Fangseile an ihrem Kreuzungspunkt mit einer Stützvorrichtung gemäss Fig. 9 abgestützt werden;
- Fig. 12: eine Variante der Anordnung von Fig. 8, wobei ein im Innern des Zelts angeordnetes Metallgerüst vorliegt.

Grundsätzlich sind in den Figuren gleiche Teile mit gleichen Bezugszeichen versehen.

### Wege zur Ausführung der Erfindung

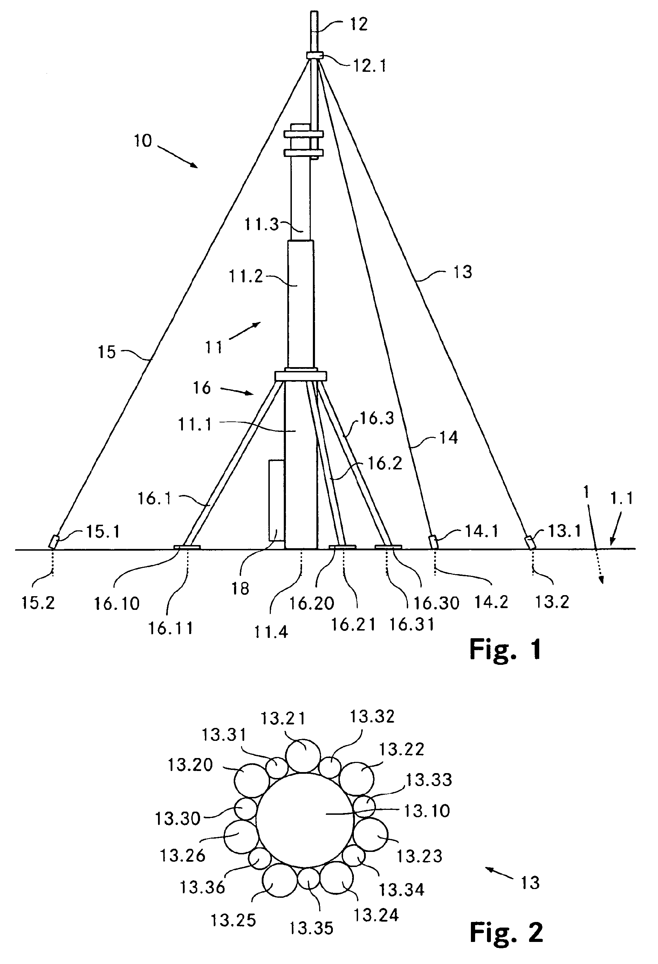

Die in Fig. 1 in einer Seitenansicht abgebildete erste Blitzfangvorrichtung 10 umfasst einen von einem horizontal verlaufenden Erdoberflächenbereich 1.1 vertikal nach oben ragenden Mast 11. Der Mast 11 besteht dabei aus drei zylindrischen Teilstücken 11.1, 11.2, 11.3 aus Aluminium. Aus dem oberen Ende des ersten Teilstücks 11.1 des Masts 11 ragt ein zweites Teilstück 11.2 nach oben. Aus dem oberen Ende des zweiten Teilstücks 11.2 ragt wiederum ein drittes Teilstück 11.3 des Masts 11 nach oben. Das zweite Teilstück 11.2 des Masts 11 ist dabei in vertikaler Richtung, relativ zum ersten Teilstück 11.1, des Masts 11 bewegbar, während entsprechend das dritte Teilstück 11.3 in vertikaler Richtung relativ zum zweiten Teilstück 11.2 des Masts 11 verschiebbar ist. Die Verschiebung der beiden bewegbaren Teilstücke 11.2, 11.3 des Masts 11 erfolgt pneumatisch, beispielsweise durch eine Handpumpe 18, welche auf der linken Seite unten am ersten Teilstück 11.1 des Masts 11 angeordnet ist.

Das unterste Teilstück 11.1 des Mast 11, welches auf dem Erdoberflächenbereich 1.1 steht, wird von einem dreibeinigen Stativ 16 aus Aluminium gestützt. Dabei sind in einem Bereich des oberen Endes des ersten Teilstücks 11.1 eine erste und nach links ragende Stütze 16.1, eine zweite und nach rechts vorne ragende Stütze 16.2 sowie eine dritte und nach rechts hinten ragende Stütze 16.3 befestigt, wobei die drei Stützen 16.1, 16.2, 16.3 symmetrisch um das erste Teilstück 11.1 herum verteilt nach unten zum Eroberflächenbereich 1 ragen. Die drei Stützen 16.1, 16.2, 16.3 sind beweglich am ersten Teilstück 11.1 befestigt und können z. B. zu Transportzwecken parallel an das untere Teilstück 11.1 des Masts 11 angelegt werden. Am unteren Ende der ersten Stütze 16.1 ist dabei ein erster tellerförmiger Fuss 16.10 angebracht, welcher auf dem Erdoberflächenbereich 1.1 aufliegt. An der zweiten Stütze 16.2 und an der dritten Stütze 16.3 sind in gleicher Weise ein zweiter tellerförmiger Fuss 16.20 und ein dritter tellerförmiger Fuss 16.30 angeordnet. Der erste tellerförmige Fuss 16.10 ist durch einen in Fig. 1 durch eine gestrichelte Linie angedeuteten ersten Erdanker 16.11, welcher im Erdbereich 1 unterhalb dem Erdoberflächenbereich 1.1 verankert ist, auf dem Erdoberflächenbereich 1 mechanisch fixiert. Der zweite tellerförmige Fuss 16.20 ist mit einem zweiten Erdanker 16.20, welcher in den Erbereich und der dritte tellerförmige Fuss 16.30 mit einem dritten Erdanker 16.30 in gleicher Weise auf dem Erdoberflächenbereich 1.1 befestigt. Die drei Erdanker sind dabei aus Metall gefertigt und stellen eine leitfähige Verbindung zu einem Erdbereich 1 her.

Am oberen Ende des dritten Teilstücks 11.3 des Masts 11 ist seitlich eine massive und vertikal nach oben ragende Blitzfangstange 12 aus Aluminium in an sich bekannter Weise festgeklemmt. Der Mast 11 mit augesetzter Blitzfangstange 12 hat eine Länge von z. B. 8 m, gemessen ab dem Erdoberflächenbereich 1.

Das auf dem Eroberflächenbereich 1.1 stehende untere Ende des ersten Teilstücks 11.1 des Masts 11 ist zudem durch einen vierten Erdanker 11.4 auf dem Erdoberflächenbereich 1.1 fixiert und mit dem Erdbereich 1 elektrisch leitend verbunden.

In einem oberen Bereich der Blitzfangstange 12 ist ein metallischer Befestigungsring 12.1 um die Blitzfangstange 12 herum angeordnet. Ein erstes elektrisch leitendes Abspannseil 13 ist mit seinem oberen Ende im Befestigungsring 12.1 verankert und ragt schräg nach rechts vorne zum Erdoberflächenbereich 1.1 nach unten. Am unteren Ende des ersten elektrisch leitenden Abspannseils 13 ist eine erste metallische Öse 13.1 als Verbindungsvorrichtung angebracht. Ein erster und in Fig. 1 lediglich durch eine gestrichelte Linie angedeuteter Tiefenerder 13.2 ragt durch die erste Öse 13.1 in den Erdbereich 1. Der erste Tiefenerder 13.2 besteht aus Metall und ragt ca. 3 m in vertikaler Richtung in den Erdbereich 1. Damit ist das erste elektrisch leitende Abspannseil 13 mechanisch im Erdbereich 1 fixiert und gleichzeitig liegt eine elektrische Verbindung zwischen dem erstem Abspannseil 13 und dem Erdbereich 1 vor.

Ein zweites elektrisch leitendes Abspannseil 14 ist ebenfalls mit seinem oberen Ende im Befestigungsring 12.1 verankert und ragt in Fig. 1 schräg nach rechts hinten zum Erdoberflächenbereich 1.1 nach unten. Am unteren Ende des zweiten elektrisch leitenden Abspannseils 14 ist eine zweite metallische Öse 14.1 als Verbindungsvorrichtung angebracht. Ein zweiter und in Fig. 1 lediglich durch eine gestrichelte Linie angedeuteter Tiefenerder 14.2 ragt durch die zweite Öse 14.1 in den Erdbereich 1. Der zweite Tiefenerder 14.2 besteht aus Metall und ragt ca. 3 m in vertikaler Richtung in den Erdbereich 1. Damit ist das zweite elektrisch leitende Abspannseil 14 mechanisch im Erdbereich 1 fixiert und gleichzeitig liegt eine elektrische Verbindung zwischen dem zweiten Abspannseil 14 und dem Erdbereich 1 vor.

In gleicher Weise ist am Befestigungsring 12.1 ein drittes elektrisch leitendes Abspannseil 15 mit seinem oberen Ende im Befestigungsring 12.1 verankert und ragt in Fig. 1 schräg nach links unten zum Erdoberflächenbereich 1.1 hin. Am unteren Ende des dritten elektrisch leitenden Abspannseils 15 ist eine dritte metallische Öse 15.1 als Verbindungsvorrichtung angebracht. Ein dritter und in Fig. 1 lediglich durch eine gestrichelte Linie angedeuteter Tiefenerder 15.2 ragt durch die dritte Öse 15.1 in den Erdbereich 1. Der dritte Tiefenerder 15.2 besteht aus Metall und ragt ca. 3 m in vertikaler Richtung in den Erdbereich 1. Damit ist das dritte elektrisch leitende Abspannseil 15 mechanisch im Erdbereich 1 fixiert und gleichzeitig liegt eine elektrische Verbindung zwischen dem dritten Abspannseil 15 und dem Erdbereich 1 vor.

Der Mast 11, das dreibeinige Stativ 16 und die drei elektrisch leitenden Abspannseile 13, 14, 15 dienen dabei zusätzlich zu ihren Halte- und/oder Stabilisierungsfunktionen als Ableiter, welche die Blitzfangstange 12 mit dem unter dem Erdoberflächenbereich 1.1 liegenden Erdbereich 1 elektrisch leitend verbinden.

Fig. 2 zeigt einen Seilquerschnitt durch das erste elektrisch leitende Abspannseile 13 aus Fig. 1. Der Kern 13.1 des ersten Abspannseils 13 besteht vollständig aus einem hochflexiblen Kupferdraht mit kreisrundem Querschnitt und einer elektrisch leitenden Querschnittfläche von z. B. 10 mm² oder mehr. In der Praxis bevorzugte Querschnittsflächen betragen z. B. 16 mm² oder 25 mm². Ausserhalb des Kerns 13.1 aus Kupfer sind sieben verseilte Stahldrähte 13.20, 13.21...13.26 angeordnet, welche direkt an den Kern 13.1 anliegen. Zwischen jeweils zwei benachbarten Stahldrähten 13.20, 13.21...13.26 ist jeweils einer von insgesamt sieben weiteren Drähten 13.30, 13.31...13.36 angebracht. Die sieben weiteren Drähte 13.30, 13.31...13.36 sind im Durchmesser kleiner als die sieben Stahldrähte 13.20, 13.21...13.26 und bestehen aus einer Legierung aus Kupfer mit Zinn oder Gold. Die sieben Stahldrähte 13.20, 13.21...13.26 verleihen dem Abspannseil 13 insbesondere eine verbesserte Festigkeit. Zudem schützen die sieben Stahldrähte 13.20, 13.21...13.26 aufgrund ihres grösseren Durchmessers den relativ weichen Kern 13.1 aus Kupfer und die ebenfalls relativ weichen sieben weiteren Drähten 13.30, 13.31...13.36 bestmöglich vor ungewolltem Abrieb bei der Befestigung an der Blitzfangstange 12 oder im Bereich der Öse 13.1 des Abspannseils 13.

Die anderen beiden elektrisch leitenden Abspannseile 14, 15 sind baugleich ausgebildet.

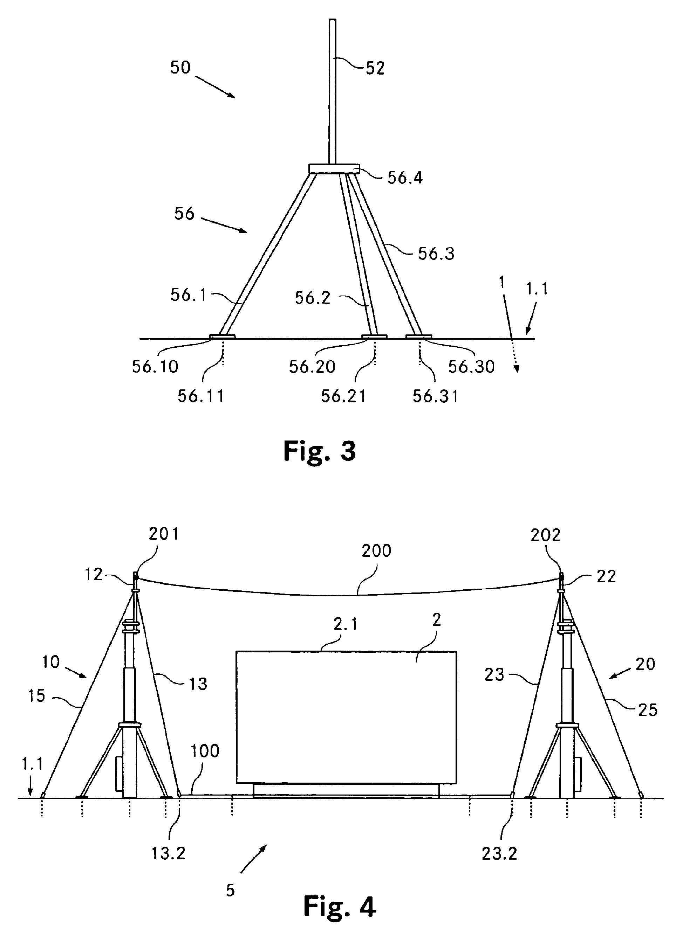

Fig. 3 zeigt eine weitere Blitzfangvorrichtung 50, welche auf einem Dreibein 56 basiert. Das Dreibein 56 verfügt über drei in der Länge veränderliche Stützen 56.1, 56.2, 56.3 aus Metall, welche an einer gemeinsamen metallischen Trägerplatte 56.4 beweglich befestigt sind und schräg nach unten auf den Erdoberflächenbereich 1.1 ragen. Die ersten Stütze 56.1 des Dreibeins 56 ragt in Fig. 3 von der Trägerplatte 56.4 nach links unten und verfügt am unteren Ende über einen ersten tellerförmigen Fuss 56.10. Der erste tellerförmige Fuss 56.10 ist mit einem in Fig. 3 durch eine gestrichelte Linie angedeuteten ersten metallischen Tiefenerder 56.11 im Erdbereich 1 verankert und mit diesem elektrisch leitend verbunden. Die zweite Stütze 26.2 ragt in Fig. 3 von der Trägerplatte 56.4 nach vorne rechts auf den Erdoberflächenbereich 1.1 und verfügt am unteren Ende über einen zweiten tellerförmigen Fuss 56.20. Der zweite tellerförmige Fuss 56.20 ist mit einem in Fig. 3 durch eine gestrichelte Linie angedeuteten zweiten metallischen Tiefenerder 56.21 im Erdbereich 1 verankert und mit diesem elektrisch leitend verbunden. Die dritte Stütze 26.3 ragt in Fig. 3 von der Trägerplatte 56.4 nach rechts hinten auf den Erdoberflächenbereich 1.1 und verfügt am unteren Ende über einen dritten tellerförmigen Fuss 56.30. Der dritte tellerförmige Fuss 56.30 ist mit einem in Fig. 3 durch eine gestrichelte Linie angedeuteten dritten metallischen Tiefenerder 56.31 im Erdbereich 1 verankert und mit diesem elektrisch leitend verbunden. Die drei Tiefenerder 56.11, 56.21, 56.31 ragen ca. 3 m in den Erdbereich hinein und bilden eine mechanisch stabile Verankerung für das Freibein 56.

Da die drei Stützen 56.1, 56.2, 56.3 in der Länge veränderbar ausgebildet sind, kann das Dreibein 56 auch auf einem unebenen und/oder schiefen Erdoberflächenbereich 1.1 vertikaler aufgestellt werden. Die drei Stützen 56.1, 56.2, 56.3 sind an der gemeinsamen Trägerplatte 56.4 beweglich befestigt, so dass die drei Stützen 56.1, 56.2, 56.3 z. B. zu Transportzwecken in einer Richtung parallel zur Blitzfangstange 52 und aneinander anliegend ausgerichtet werden können.

Von der gemeinsamen Trägerplatte 56.4 ragt eine Blitzfangstande 52 aus Aluminium in vertikaler Richtung nach oben. Die Blitzfangstange 52 ist über das metallische Dreibein 56 und die drei Tiefenerder 56.11, 56.21, 56.31 mit dem Erdbereich 1 elektrisch leitend verbunden.

In den Fig. 4, 5 und 6 ist eine erste erfindungsgemässe Blitzschutzanordnung 5 für ein Zelt 2 aus verschiedenen Blickrichtungen abgebildet. Das Zelt 2 ist dabei zwischen der ersten Blitzfangvorrichtung 10, welche bereits in Fig. 1 beschrieben wurde, und einer mit der ersten Blitzschutzanordnung 10 baugleichen zweiten Blitzschutzvorrichtung 20 auf dem Erdoberflächenbereich 1.1 angeordnet. Die beiden Blitzschutzanordnungen 10, 20 liegen dabei auf einer Verlängerung der Längsmittelachse des Zelts 2 und weisen einen Abstand von ca. 16 m auf. Das Zelt 2 weist beispielsweise eine Länge 7 m, eine Breite von 5 m und eine Höhe von 3 m auf. Oberhalb des Firsts 2.1 des Zelts 2 verläuft ein im Wesentlichen in horizontaler Richtung gespanntes erstes Fangseil 200 aus Metall zwischen der ersten Blitzfangstange 12, der ersten Blitzfangvorrichtung 10 und der zweiten Blitzfangstange 22 der zweiten Blitzfangvorrichtung 20. Am ersten Ende des ersten Fangseils 200 ist dabei eine erste Befestigungsvorrichtung 201 angebracht, welche das erste Fangseil 200 mit der ersten Blitzfangstange 12 elektrisch leitend verbindet. Ebenso ist am zweiten des ersten Fangseils eine zweite Befestigungsvorrichtung 202 angeordnet, welche das erste Fangseil 200 mit der zweiten Blitzfangstange 22 elektrisch leitend verbindet. Das erste Fangseil 200 und die beiden Blitzfangvorrichtungen 10, 20 weisen dabei einen Abstand von ca. 1.5 m zum Zelt 2 auf.

Um das Zelt 2 herum und zwischen den beiden Blitzfangvorrichtungen 10, 20 ist auf dem Erdoberflächenbereich 1.1 ein elektrischer Ringleiter 100 in einem Rechteck aufgelegt, wobei eine Längsachse des durch den elektrischen Ringleiter 100 gebildeten Rechtecks unterhalb des Firsts 2.1 des Zelts 2 verläuft. Der Abstand zwischen Ringleiter 100 und Zelt 2 beträgt wenigstens 1.5 m. Der elektrische Ringleiter 100 besteht aus einem Kupferseil mit einem elektrisch leitenden Querschnitt von ca. 16 mm². In den Bereichen der Ecken des rechteckförmig angeordneten elektrischen Ringleiters 100 ist dieser mit insgesamt acht Erdankern 100.1, 100.2...100.8 geerdet und mechanisch fixiert. Der rechteckförmig angeordnete elektrische Ringleiter 100 weist z. B. eine Länge von ca. 12 m und eine Breite von ca. 9 m auf.

Das erste und das zweite elektrisch leitende Abspannseil 13, 14 der ersten Blitzfangvorrichtung 10 enden zudem direkt auf dem elektrischen Ringleiter 100, so dass elektrische Verbindungen zwischen den beiden ersten Abspannseilen 13, 14 der ersten Blitzfangvorrichtung 10 und dem Ringleiter 100 vorliegen. Über die bereits in Fig. 1 beschriebenen ersten beiden Tiefenanker 13.2, 14.2 sind sowohl die ersten beiden Abspannseile 13, 14 als auch der Ringleiter 100 zusätzlich geerdet und fixiert.

Die zweite Blitzfangvorrichtung ist in gleicher Weise angeordnet. Das erste und das zweite elektrisch leitende Abspannseil 23, 24 der zweiten Blitzfangvorrichtung 20 enden dabei auf der entgegen gesetzten Seite auf dem elektrischen Ringleiter 100, so dass elektrische Verbindungen zwischen den beiden ersten Abspannseilen 23, 24 der zweiten Blitzfangvorrichtung 20 und dem Ringleiter 100 vorliegen. Die Erdung und Fixierung der insgesamt drei Abspannseile 23, 24, 25 der zweiten Blitzfangvorrichtung erfolgt wie bei der ersten Blitzfangvorrichtung in Fig. 1 beschrieben.

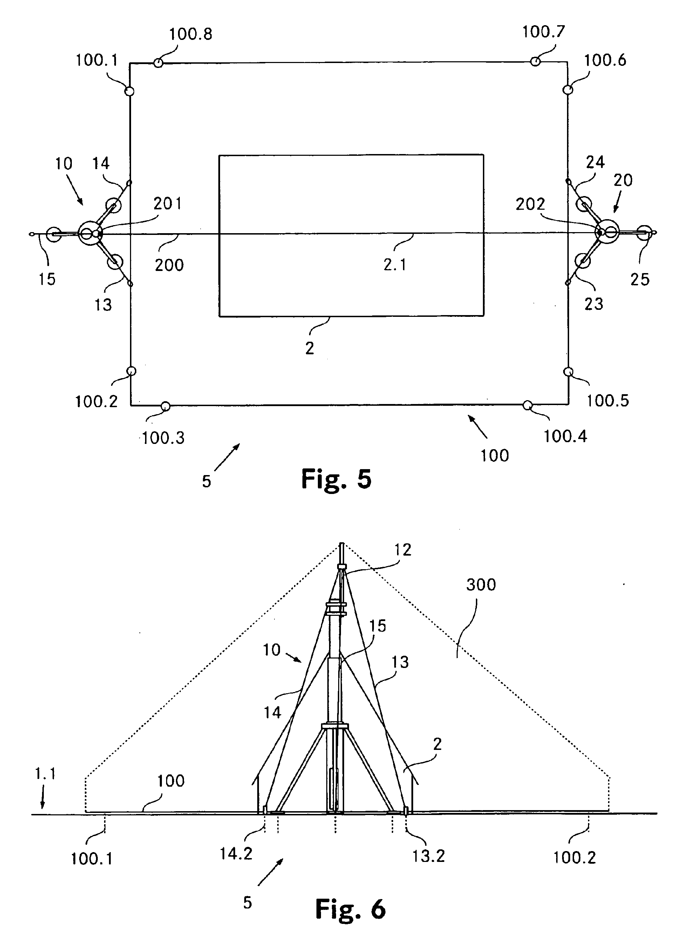

In Fig. 6 ist eine Ansicht von vorne auf die erste Blitzfangvorrichtung 10 und das dahinter liegende Zelt 2 der ersten erfindungsgemässen Blitzschutzanordnung 5 dargestellt. Die vom oberen Ende der Blitzfangstange 12 ausgehenden und beidseits der Blitzfangstange 12 in einem Winkel von ca. 45° schräg zum Erdoberflächenbereich 1.1 nach unten ragenden und gestrichelten Linien deuten dabei das durch die erste Blitzschutzanordnung gebildete zeltförmige Schutzvolumen 300 oberhalb des elektrischen Ringleiters 100 an. Aufgrund der Höhe von ca. 8 m der beiden Blitzfangeinrichtungen 10, 20 und den Dimensionen des Ringleiters 100 liegt das Zelt 2 vollständig innerhalb des Schutzvolumens 300.

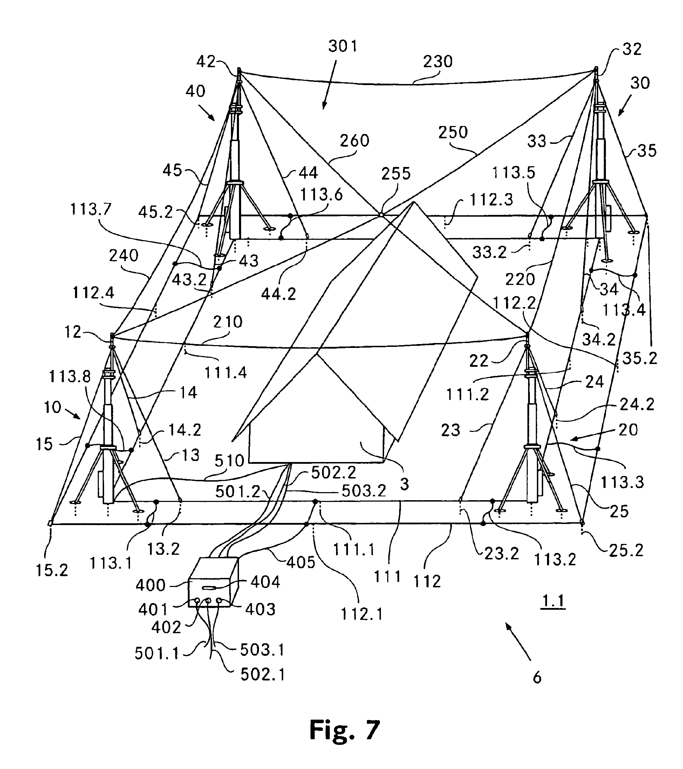

In Fig. 7 ist eine zweite erfindungsgemässe Blitzschutzanordnung 6 perspektivisch dargestellt. D ie zweite Blitzschutzanordnung 6 basiert auf vier in einem Rechteck auf einem Erdoberflächenbereich 1.1 abgeordneten Blitzfangvorrichtungen 10, 20, 30, 40. Die erste Blitzfangvorrichtung 10 ist dabei vorne links, die zweite Blitzfangvorrichtung 20 vorne rechts, die dritte Blitzfangvorrichtung 30 hinten rechts und die vierte Blitzschutzanordnung 40 hinten links angeordnet. Alle vier Blitzfangvorrichtungen 10, 20, 30, 40 sind baugleich mit der ersten und bereits bei Fig. 1 beschriebenen Blitzfangvorrichtung 10.

Die erste Blitzfangstange 12 der ersten Blitzfangvorrichtung 10 ist dabei über ein im Wesentlich horizontal gespanntes erstes metallisches Fangseil 210 mit der zweiten Blitzfangstange 22 der zweiten Blitzfangvorrichtung 20 elektrisch leitend verbunden. Die zweite Blitzfangstange 22 der zweitem Blitzfangvorrichtung 20 ist wiederum über ein im Wesentlich horizontal gespanntes zweites metallisches Fangseil 220 mit der dritten Blitzfangstange 32 der dritten Blitzfangvorrichtung 30 elektrisch leitend verbunden. Entsprechend ist die dritte Blitzfangstange 32 der dritten Blitzfangvorrichtung 30 über ein im Wesentlich horizontal gespanntes drittes metallisches Fangseil 230 mit der vierten Blitzfangstange 42 der vierten Blitzfangvorrichtung 40 elektrisch leitend verbunden. Die vierte Blitzfangstange 42 der vierten Blitzfangvorrichtung 40 ist schlussendlich über ein im Wesentlich horizontal gespanntes viertes metallisches Fangseil 240 wieder mit der ersten Blitzfangstange 12 der ersten Blitzfangvorrichtung 10 elektrisch leitend verbunden. Zwischen der ersten Blitzfangstange 12 der ersten Blitzfangvorrichtung 10 und der dritten Blitzfangstange 32 der dritten Blitzfangvorrichtung 30 verläuft im Wesentlichen in horizontaler Richtung ein gespanntes fünftes metallisches Fangseil 250, welches mit der ersten Blitzfangstange 12 und der dritten Blitzfangstange 32 elektrisch leitend verbunden ist. Von der zweiten Blitzfangstange 22 der zweiten Blitzfangvorrichtung 20 ist wiederum ein sechstes metallisches Fangseil 260 im Wesentlichen in horizontaler Richtung gespannt, welches mit der zweiten Blitzfangstange 22 und der vierten Blitzfangstange 42 elektrisch leitend verbunden ist. Das fünfte Fangseil 250 und das sechste Fangseil 260 überkreuzen sich dabei in einem gemeinsamen Kreuzbereich 255.

Ein erster rechteckförmig angeordneter elektrischer Ringleiter 111 verbindet die vier Blitzfangvorrichtungen auf dem Erdoberflächenbereich 1.1 elektrisch miteinander. Der erste elektrische Ringleiter 111 besteht aus einem Kupferseil mit einem elektrisch leitenden Querschnitt von ca. 16 mm². In den Bereichen zwischen den Ecken des rechteckförmig angeordneten ersten elektrischen Ringleiters 111 bzw. in den Bereichen zwischen benachbarten Blitzfangvorrichtungen 10, 20, 30, 40 ist dieser mit insgesamt vier Erdankern 111.1, 111.2...111.4 geerdet und mechanisch fixiert.

Das erste und das zweite elektrisch leitende Abspannseil 13, 14 der ersten Blitzfangvorrichtung 10 enden zudem direkt auf dem ersten elektrischen Ringleiter 111, so dass elektrische Verbindungen zwischen den beiden ersten Abspannseilen 13, 14 der ersten Blitzfangvorrichtung 10 und dem ersten Ringleiter 111 vorliegen. Über die bereits in Fig. 1 beschriebenen ersten beiden Tiefenanker 13.2, 14.2 sind sowohl die ersten beiden Abspannseile 13, 14 als auch der erste Ringleiter 111 zusätzlich geerdet und fixiert.

Das erste und das zweite elektrisch leitende Abspannseil 23, 24 der zweiten Blitzfangvorrichtung 20 enden in gleicher Weise direkt auf dem ersten elektrischen Ringleiter 111, so dass elektrische Verbindungen zwischen den beiden ersten Abspannseilen 23, 24 der zweiten Blitzfangvorrichtung 20 und dem ersten Ringleiter 111 vorliegen. Die Fixierung der ersten beiden Abspannseile 23, 24 der zweiten Blitzfangvorrichtung 20 erfolgt wie bei Fig. 1 bereits bei der ersten Blitzfangeinrichtung 10 beschrieben, durch einen ersten Tiefenanker 23.2 und einen zweiten Tiefenanker 24.2 der zweiten Blitzfangvorrichtung 20. Die ersten beiden Tiefenanker 23.2, 24.2 der zweiten Blitzfangvorrichtung fixieren und erden dabei den ersten elektrischen Ringleiter 111 zusätzlich.

Das erste und das zweite elektrisch leitende Abspannseil 33, 34 der dritten Blitzfangvorrichtung 30 enden ebenfalls direkt auf dem ersten elektrischen Ringleiter 111, so dass elektrische Verbindungen zwischen den beiden ersten Abspannseilen 33, 34 der dritten Blitzfangvorrichtung 30 und dem ersten Ringleiter 111 vorliegen. Die Fixierung der ersten beiden Abspannseile 33, 34 der dritten Blitzfangvorrichtung 30 erfolgt wie bei Fig. 1 bereits bei der ersten Blitzfangeinrichtung 10 beschrieben, durch einen ersten Tiefenanker 33.2 und einen zweiten Tiefenanker 34.2 der dritten Blitzfangvorrichtung 30. Die ersten beiden Tiefenanker 33.2, 34.2 der dritten Blitzfangvorrichtung fixieren und erden dabei den ersten elektrischen Ringleiter 111 zusätzlich.

Das erste und das zweite elektrisch leitende Abspannseil 43, 44 der vierten Blitzfangvorrichtung 40 enden ebenfalls direkt auf dem ersten elektrischen Ringleiter 111, so dass elektrische Verbindungen zwischen den beiden ersten Abspannseilen 43, 44 der vierten Blitzfangvorrichtung 40 und dem ersten Ringleiter 111 vorliegen. Die Fixierung der ersten beiden Abspannseile 43, 44 der vierten Blitzfangvorrichtung 40 erfolgt wie bei Fig. 1 bereits bei der ersten Blitzfangeinrichtung 10 beschrieben, durch einen ersten Tiefenanker 43.2 und einen zweiten Tiefenanker 44.2 der vierten Blitzfangvorrichtung 40. Die ersten beiden Tiefenanker 43.2, 44.2 der vierten Blitzfangvorrichtung fixieren und erden dabei den ersten elektrischen Ringleiter 111 zusätzlich.

Ausserhalb des ersten elektrischen Ringleiters 111 ist zusätzlich ein zweiter elektrischer Ringleiter 112 ebenfalls in einer rechteckförmigen Geometrie auf dem Erdoberflächenbereich 1.1 angeordnet. Der zweite elektrische Ringleiter 112 ist dabei im Bereich der ersten Blitzfangvorrichtung 10 mit dem dritten Abspannseil 15 der ersten Blitzfangvorrichtung 10 elektrisch leitend verbunden und wird durch den dritten Tiefenanker 15.2 der ersten Blitzfangvorrichtung 10 geerdet und fixiert. Im Bereich der zweiten Blitzfangvorrichtung 20 ist der zweite elektrische Ringleiter 112 mit dem dritten Abspannseil 25 der zweiten Blitzfangvorrichtung 20 elektrisch leitend verbunden und wird durch den dritten Tiefenanker 25.2 der zweiten Blitzfangvorrichtung 20 geerdet und mechanisch fixiert. Im Bereich der dritten Blitzfangvorrichtung 30 ist der zweite elektrische Ringleiter 112 mit dem dritten Abspannseil 35 der dritten Blitzfangvorrichtung 30 elektrisch leitend verbunden und wird durch den dritten Tiefenanker 35.2 der dritten Blitzfangvorrichtung 30 geerdet und mechanisch fixiert. Ebenso ist im Bereich der vierten Blitzfangvorrichtung 40 der zweite elektrische Ringleiter 112 mit dem dritten Abspannseil 45 der vierten Blitzfangvorrichtung 40 elektrisch leitend verbunden und wird durch den dritten Tiefenanker 45.2 der vierten Blitzfangvorrichtung 40 geerdet und mechanisch fixiert.

In den Bereichen zwischen den Ecken des rechteckförmig angeordneten zweiten elektrischen Ringleiters 112 bzw. in den Bereichen zwischen benachbarten Blitzfangvorrichtungen 10, 20, 30, 40 ist der zweite elektrische Ringleiter 112 mit insgesamt vier weiteren Erdankern 112.1, 112.2...112.4 zusätzlich geerdet und mechanisch fixiert.

Der erste elektrische Ringleiter 111 und der zweite elektrische Ringleiter 112 sind zudem durch insgesamt acht Verbindungskabel 113.1, 113.2...113.8 elektrisch leitend miteinander verbunden. Dadurch wird insbesondere eine Stromaufteilung zwischen dem ersten elektrischen Ringleiter 111 und dem zweiten elektrischen Ringleiter 112 erreicht.

Im durch die zweite Blitzfangvorrichtung 6 gebildeten quaderförmigen Schutzvolumen 301 ist auf dem Erdoberflächenbereich 1.1 ein zweites Zelt 3 angeordnet, welches gegenüber den Bestandteilen der zweiten Blitzfangvorrichtung 6 allseitig einen Abstand von wenigstens 1.5 m aufweist.

Ausserhalb des zweiten elektrischen Ringleiters 112 ist des Weiteren eine zentrale Einspeisevorrichtung 400 in einem wasserdichten Gehäuse mit einem Traggriff 404 angeordnet, welche ebenfalls Bestandteil der zweiten Blitzschutzanordnung 6 ist. Die zentrale Einspeisevorrichtung 400 weist eine erste Steckerbuchse 401 für ein externes kupferbasiertes Telefonkabel 501.1, eine zweite Steckerbuchse 402 für ein externes Stromkabel 502.1 und eine dritte Steckerbuchse 403 für ein externes optisches Lichtwellenleiterkabel 503.1 auf. Das externe Telefonkabel 501.1, das externe Stromkabel 502.1 und das externe Lichtwellenleiterkabel 503.1 werden z. B. von einer entfernten Verteilerstation auf dem Erdoberflächenbereich bis zur zentralen Einspeisevorrichtung 400 geführt.

Das Gehäuse der zentralen Einspeisevorrichtung 400 ist des Weiteren durch eine Erdungsleitung 405 elektrisch mit dem ersten elektrischen Ringleiter 111 und dem zweiten elektrischen Ringleiter 112 verbunden. Die Erdungsleitung 405 kon taktiert den ersten elektrischen Ringleiter 111 dabei im Bereich des ersten Erdankers 111.1 des ersten elektrischen Ringleiters 111. Der zweite elektrische Ringleiter 112 wird von der Erdungsleitung 405 im Bereich des ersten Erdankers 112.1 des zweiten elektrischen Ringleiters 112 kontaktiert. Damit werden der erste Erdankers 111.1 des ersten elektrischen Ringleiters 111 und der erste Erdanker 112.1 des zweiten elektrischen Ringleiters 112 durch die Erdungsleitung 405 direkt elektrisch verbunden.

Innerhalb der zentralen Einspeisevorrichtung 400 sind die drei Steckerbuchsen 401, 402, 403 mit Überspannungs- und/oder Stromschutzschaltungen verbunden. Auf der Hinterseite der zentralen Einspeisevorrichtung 400 liegen drei weitere und in Fig. 7 nicht sichtbare Steckerbuchsen vor. An diese weiteren Steckerbuchsen wird entsprechend das zeltseitige Telefonkabel 501.2, das zeltseitige Stromkabel 502.2 und das zeltseitige Lichtwellenleiterkabel 503.2 angeschlossen. Aufgrund der zwischen den externen Kabeln 501.1, 502.1, 503.1 und den zeltseitigen Kabeln 501.2, 502.2 503.2 vorhandenen Überspannungs- und/oder Stromschutzschaltungen stellt ein möglicher Blitzeinschlag in eines der externen Kabeln 501.1, 502.1, 503.1 keine Gefahr für das im Schutzvolumen 301 angeordnete zweite Zelt 3 oder darin befindliche Personen oder Geräte dar. Elektrische Geräte, welche sich beispielsweise im Zelt befinden, werden z. B. mit einem Erdkabel 510, welches mit dem ersten elektrische Ringleiter 111 verbunden ist, geerdet.

Die zeltseitigen Kabel 501.2, 502.2 503.2 und die zentrale Einspeisevorrichtung 400 liegen im vor direkten Blitzeinschlägen geschützten Bereich der zweiten Blitzschutzanordnung 6 und sind daher nicht gefährdet.

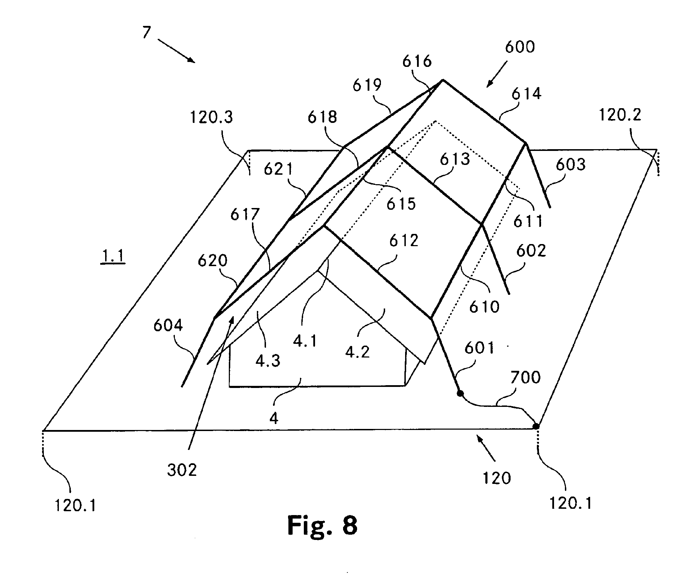

In Fig. 8 ist eine dritte Blitzschutzanordnung 7 in perspektivischer Darstellung abgebildet. Ein drittes Zelt 4 ist dabei von einem rechteckig angeordneten und auf einem Erdoberflächenbereich 1.1 aufgelegten elektrischen Ringleiter 120 umgeben. Der rechteckförmige ausgelegte elektrische Ringleiter 120 ist im Bereich der Ecken mit insgesamt vier Tiefenerdern 120.1, 120.2, 120.3, 120.4 elektrisch geerdet und mechanisch befestigt.

Das dritte Zelt 4 ist ein Zelt mit einem Satteldach, welches zwei gegeneinander geneigte rechteckige Dachflächen 4.2, 4.3 aufweist, die sich an der höchsten waagrechten Kante bzw. dem First 4.1 des Zelts 4 treffen. Die Höhe des dritten Zelts 4 misst ca. 2.5 m, während die Breite bei ca. 4 m und die Länge bei ca. 5 m liegt. Ober halb der zwei rechteckigen Dachflächen 4.2, 4.3 des dritten Zelts 4 ist ein beabstandetes und gewinkeltes Metallgerüst 600 angeordnet, welches in einem oberen Bereich der Form der beiden Dachflächen 4.2, 4.3 folgt. Der obere Bereich Metallgerüst 600 besteht aus zwölf oberen Metallstäben 610, 611...621, welche eine Gitterstruktur mit insgesamt vier gleich grossen Gittermaschen bilden. Die einzelnen oberen Metallstäbe 610, 611...621 weisen eine Länge von ca. 2.5 m auf. Sechs untere Metallstäbe 601, 602...606 mit einer Länge von ca. 2 m bilden sechs schräg vom dritten Zelt 4 wegragende Standfüsse für die aus den oberen Metallstäben 610, 611...621 gebildete Gitterstruktur. Die unteren Metallstäbe sind 601, 602...606 mit ihren unteren Enden im Erdbodenbereich 1.1 durch nicht dargestellte Erdanker elektrisch leitend fixiert. Über ein elektrisches Kabel 700 ist der elektrische Ringleiter 120 zudem mit dem Metallgerüst 600 elektrisch verbunden. Das Metallgerüst 600 wirkt sowohl als Fangeinrichtung für Blitze, als auch als Ableiter und bildet zusammen mit dem elektrischen Ringleiter 120 ein weiteres Schutzvolumen 302.

Die oberen Metallstäbe 610, 611...621 und die unteren Metallstäbe 601, 602...606 des Metallgerüsts 600 sind über spezielle Verbindungsmuffen lösbar miteinander verbunden. Das gesamte Metallgerüst kann daher zerlegt und Platz sparend in Transportkisten verstaut werden.

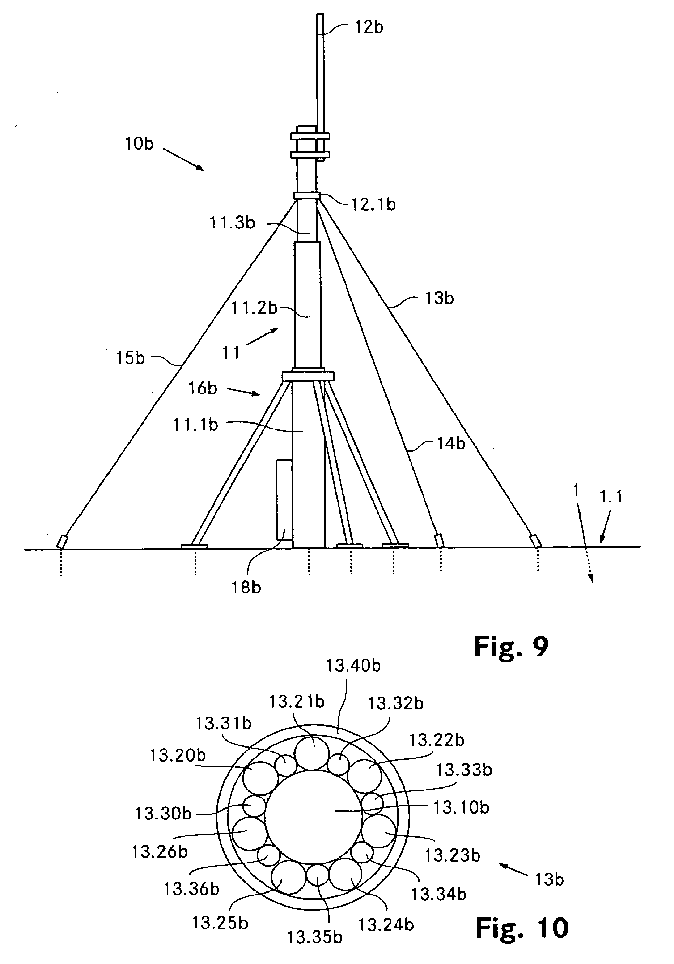

In Fig. 9 ist eine Stützvorrichtung 10b in einer Seitenansicht dargestellt. Die Stützvorrichtung 10b umfasst einen vom horizontal verlaufenden Erdoberflächenbereich 1.1 vertikal nach oben ragenden Mast 11b. Der Mast 11b besteht dabei aus drei zylindrischen Teilstücken 11.1b, 11.2b, 11.3b aus einem elektrisch nicht leitenden Material, z. B. einem faserverstärkten Kunststoff. Aus dem oberen Ende des ersten Teilstücks 11.1b des Masts 11b ragt ein zweites Teilstück 11.2b nach oben. Aus dem oberen Ende des zweiten Teilstücks 11.2b ragt wiederum ein drittes Teilstück 11.3b des Masts 11b nach oben. Das zweite Teilstück 11.2b des Masts 11b ist dabei in vertikaler Richtung, relativ zum ersten Teilstück 11.1b, des Masts 11b bewegbar, während entsprechend das dritte Teilstück 11.3b in vertikaler Richtung relativ zum zweiten Teilstück 11.2b des Masts 11b verschiebbar ist. Die Verschiebung der beiden bewegbaren Teilstücke 11.2b, 11.3b des Masts 11b erfolgt pneumatisch, beispielsweise durch eine Handpumpe 18b, welche auf der linken Seite unten am ersten Teilstück 11.1b des Masts 11b angeordnet ist.

Das unterste Teilstück 11.1b des Mast 11b, welches auf dem Erdoberflächenbereich 1.1 steht, wird von einem dreibeinigen Stativ 16b gestützt. Das dreibeinige Stativ 16b der Stützvorrichtung 10b ist dabei z. B. baugleich ausgebildet wie das Stativ 16 der ersten Blitzfangvorrichtung 10.

Am oberen Ende des dritten Teilstücks 11.3b des Masts 11b ist seitlich eine massive und vertikal nach oben ragende Blitzfangstange 12b aus Aluminium in an sich bekannter Weise festgeklemmt. Der Mast 11b mit aufgesetzter Blitzfangstange 12b hat beispielsweise eine Länge von 8 m, gemessen ab dem Erdoberflächenbereich 1. Die Verankerung des Stativs 16b ist dabei wie beim Stativ 16 der ersten Blitzfangvorrichtung 10 unter Verwendung von Erdankern realisiert.

In einem mittleren Bereich des dritten Teilstücks 11.3b des Masts 11b ist ein Befestigungsring 12.1b angeordnet. Ein erstes isoliertes Abspannseil 13b ist mit seinem oberen Ende im Befestigungsring 12.1b befestigt und ragt schräg nach rechts vorne zum Erdoberflächenbereich 1.1 nach unten.

In gleicher Weise sind am Befestigungsring 12.1b ein zweites isoliertes Abspannseil 14b und ein drittes isoliertes Abspannseil 15b mit ihren oberen Enden im Befestigungsring 12.1b befestigt und ragen nach unten zum Erdoberflächenbereich 1.1 hin.

An ihren unteren Enden sind die drei isolierten Abspannseile 13b, 14b, 15b in an sich bekannter Weise mit einem Erdanker im Erdreich 1 verankert.

Die Blitzfangstange 12b ist dabei sowohl gegenüber dem Mast 11b als auch den drei isolierten Abspannseilen 13b, 14b, 15b elektrisch isoliert.

Fig. 10 zeigt einen Seilquerschnitt durch das erste isolierte Abspannseil 13b aus Fig. 9. Der Kern 13.10b des ersten Abspannseils 13 besteht vollständig aus einem hochflexiblen Kupferdraht mit kreisrundem Querschnitt und einer elektrisch leitenden Querschnittfläche von 10 mm² oder mehr. In der Praxis besonders geeignet sind z. B. Querschnittsflächen von 16 mm² oder 25 mm². Ausserhalb des Kerns 13.10b aus Kupfer sind sieben verseilte Stahldrähte 13.20b, 13.21b...13.26b angeordnet, welche direkt an den Kern 13.10b anliegen. Zwischen jeweils zwei benachbarten Stahldrähten 13.20b, 13.21b...13.26b ist jeweils einer von insgesamt sieben weiteren Drähten 13.30b, 13.31b...13.36b angebracht. Die sieben weiteren Drähte 13.30b, 13.31 b...13.36b sind im Durchmesser kleiner als die sieben Stahldrähte 13.20b, 13.21b...13.26b und bestehen aus einer Legierung aus Kupfer mit Zinn oder Gold. Die sieben Stahldrähte 13.20b, 13.21b... 13.26b verleihen dem Abspannseil 13b insbesondere eine verbesserte Festigkeit. Zudem schützen die sieben Stahldrähte 13.20b, 13.21b...13.26b aufgrund ihres grösseren Durchmessers den relativ weichen Kern 13.10b aus Kupfer und die ebenfalls relativ weichen sieben weiteren Drähte 13.30b, 13.31 b...13.36b bestmöglich vor ungewolltem Abrieb bei der Befestigung am Mast 11b oder im Bereich des Erdankers.

Um die Anordnung aus dem Kern 13,10b, den sieben Stahldrähten 13.20b, 13.21b...13.26b, und den sieben weiteren Drähten 13.30b, 13.31b...13.36b ist zusätzlich ein elektrisch isolierender Aussenmantel 13.40b, z. B. aus einem aufextrudierten Kunststoff, angeordnet.

Die anderen beiden isolierenden Abspannseile 14b, 15b sind baugleich ausgebildet.

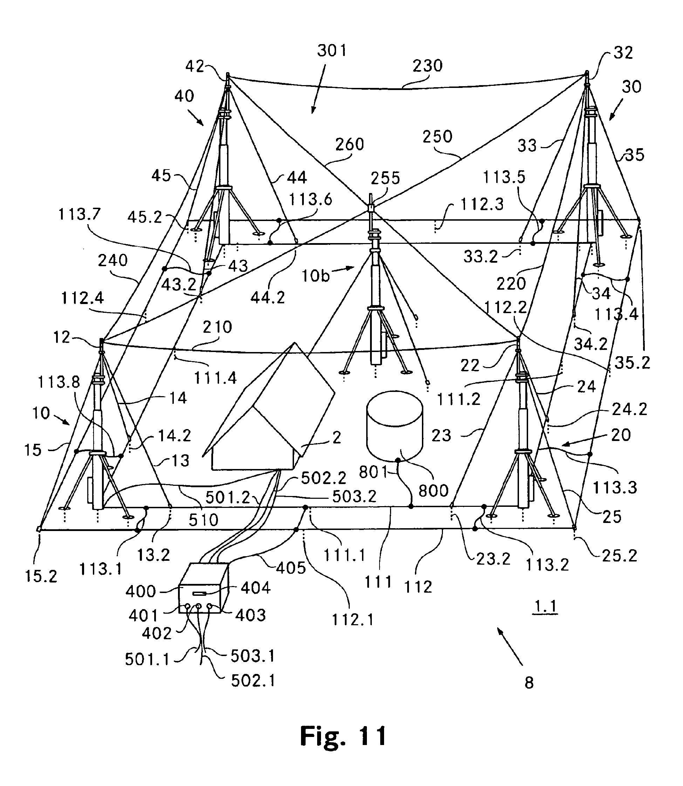

In Fig. 11 ist eine vierte Blitzschutzanordnung 8 abgebildet. Die vierte Blitzschutzanordnung 8 entspricht dabei im Wesentlichen der zweiten Blitzschutzanordnung 6 aus Fig. 7. Anstelle des zweiten Zelts 6 ist in einem Eckbereich im Schutzvolumen 301 jedoch das kleinere erste Zelt 2 aus den Fig. 4 - 6 angeordnet. Neben dem zweiten Zelt 2 liegt zudem ein Vorratstank 800 für Flüssigkeiten, z. B. Treibstoffe, vor. Der Vorratstank 800 ist dabei insbesondere über ein Verbindungskabel 801 mit dem elektrischen Ringleiter 111 elektrisch leitend verbunden. In einem zentralen Bereich des Schutzvolumens 301 der vierten Blitzschutzanordnung 8 ist des Weiteren die Stützvorrichtung 10b aus der Fig. 9 angeordnet und mit Erdankern im Erdreich 1 verankert. Die Stützvorrichtung 10b stützt dabei den Kreuzungspunkt 255 zwischen dem fünften Fangseil 250 und dem sechsten Fangseil 260.

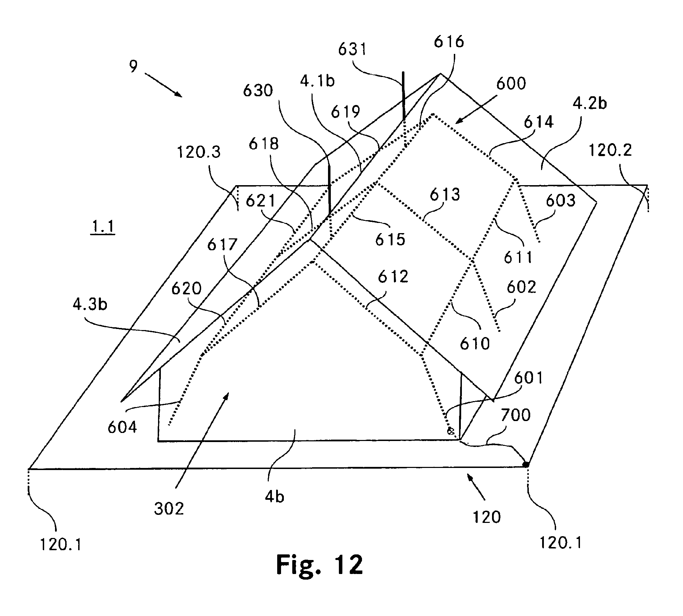

Fig. 12 zeigt eine fünfte Blitzschutzanordnung 9. Diese entspricht im Wesentlichen der in Fig. 8 dargestellten dritten Blitzschutzanordnung 7. Anstelle des dritten Zelts 4 liegt jedoch ein viertes und grösseres Zelt 4b vor, welches das gewinkelte Metallgerüst 600 umgibt. Mit anderen Worten ist das gewinkelte Metallgerüst 600 innwendig im vierten Zelt 4b angeordnet. Von den beiden oberen und horizontalen Metallstäben 615, 616 des Metallgerüsts 600 steht zusätzlich je eine metallische Blitzfangstange 630, 631 in vertikaler Richtung nach oben. Die beiden Blitzfangstangen 630, 631 sind dabei durch spezielle und in Fig. 12 nicht dargestellte Aussparungen im Bereich des Firsts 4.1b des vierten Zelts 4b geführt.

Die Blitzfangvorrichtungen 10, 20, 30, 40, welche Bestandteil der Blitzschutzanordnungen 5, 6 aus Fig. 4, 5, 6 und 7 sind, können zu Transport- und/oder Lagerzwecken ebenfalls Platz sparend zusammengelegt werden. Am Beispiel der ersten Blitzfangvorrichtung 10 wird dies im Folgenden verdeutlicht. Die übrigen und mit der ersten Blitzfangvorrichtung 10 baugleichen Blitzfangvorrichtungen 20, 30, 40 der Blitzfanganordnungen 5, 6 aus Fig. 4, 5, 6 und 7 werden entsprechend in gleicher Weise zusammengelegt.

Die drei Teilstücke 11.1, 11.2, 11.3 des telekopierbaren Masts 11 werden hierfür ineinander geschoben und die drei Stützen 16.1, 16.2, 16.3 des Stativs 16 werden parallel an das erste Teilstück 11.1 des Masts 11 angelegt. Zusätzlich können die Blitzfangstange vom dritten Teilstück 11.3 entfernt und die drei Abspannseile 13, 14, 15 aufgerollt werden. Anschliessend wird die zusammengelegte Blitzfangvorrichtung in einer Transportkiste verstaut und kann so problemlos an eine neue Einsatzstelle oder in einen Lagerraum gebracht werden.

Bei der Blitzfangvorrichtung aus Fig. 3 werden entsprechend die drei Stützen 56.1, 56.2, 56.3 parallel zueinander und aneinander anliegend ausgerichtet und die Blitzfangstange demontiert. Danach erfolgt ebenfalls eine Verstauung in einer weiteren Transportkiste.

Die übrigen Bestandteile der Blitzfangvorrichtungen 5, 6 aus Fig. 4, 5, 6 und 7 werden ebenfalls so kompakt als möglich zusammengelegt und in weiteren Transportbehältern untergebracht.

Die beschriebenen Ausführungsformen sind lediglich als illustrative Beispiele zu verstehen, welche im Rahmen der Erfindung beliebig erweitert oder abgewandelt werden können.

Bei der Blitzfangvorrichtung aus Fig. 1 und entsprechend auch bei den baugleichen Blitzfangvorrichtungen 20, 30, 40 aus den Fig. 4, 5, 6 und 7 kann grundsätzlich auch auf das Stativ 16 verzichtet werden. Es ist auch denkbar, zusätzliche Abspannseile vorzusehen, welche z. B. am ersten Teilstück 11.1 oder am zweiten Teilstück 11.2 angreifen. Insbesondere können anstelle oder zusätzlich zu den Abspannseilen 13, 14, 15 auch die isolierten Abspannseile 13b, 14b, 15b aus der Fig. 10 eingesetzt werden. Wird dabei die Isolation in den Kontaktbereichen mit der Blitzfangstange und dem Erdanker bzw. Tiefenerder entfernt, kann dennoch eine Ableitung des Blitzstroms durch die nach aussen isolierten Abspannseile 13b, 14b, 15b erhalten werden.

Bei vorhandenem Stativ 16 ist es aber auch möglich, die drei Abspannseile 13, 14, 15 wegzulassen. Dies kann insbesondere dann von Vorteil sein, wenn die Platzverhältnisse beschränkt sind und der Mast 11 nur eine geringe Höhe aufweist.

Des Weiteren kann der in Fig. 1 dargestellte Mast 11 auch aus Kunststoff oder einem isolierenden Material bestehen. In diesem Fall wird ein Blitzstrom hauptsächlich über die drei elektrisch leitenden Abspannseile 13, 14, 15 geführt. Werden anstelle der Abspannseile 13, 14, 15 die isolierten Abspannseile 13b, 14b, 15b aus der Fig. 10 eingesetzt und wird dabei die Isolation in den Kontaktbereichen mit der Blitzfangstange und dem Erdanker bzw. Tiefenerder entfernt, kann eine vollständig isolierte Ableitung des Blitzstroms durch die nach aussen isolierten Abspannseile 13b, 14b, 15b realisiert werden.

Die Blitzfangstange 12 kann zudem auch direkt in das dritte Teilstück 11.3 des Masts 11 integriert sein, so dass die Blitzfangstange beispielsweise koaxial zum Mast 11 ausgerichtet ist.

Bei dem elektrisch leitenden Abspannseil 13, welches in Fig. 2 dargestellt ist, kann grundsätzlich auch auf die sieben weiteren Drähten 13.30, 13.31...13.36, welche im Durchmesser kleiner sind, verzichtet werden. Entsprechend können in diesem Fall zusätzlich Stahldrähte vorgesehen werden oder die bereits vorhandenen sieben Stahldrähte 13.20, 13.21...13.26 können einen grösseren Durchmesser aufweisen. Ebenso ist es möglich, die drei Abspannseile 13, 14, 15, abgesehen vom Kontaktbereich mit der Blitzfangstange 12 und vom unteren Ende, mit einer Isolationsummantelung zu versehen.

Die in Fig. 3 gezeigte Blitzfangvorrichtung 50 kann ebenfalls mit Abspannseilen, welche z. B. an der Blitzfangstange 52 befestigt werden, zusätzlich stabilisiert werden. Grundsätzlich kann die Blitzfangvorrichtung aus Fig. 3 auch anstelle oder zusätzlich zu den Blitzfangvorrichtungen 10, 20, 30, 40 aus den Fig. 4, 5, 6 und 7 verwendet werden.

Bei der Blitzschutzanordnung 5 aus Fig. 4 kann auf das Fangseil verzichtet werden, falls das Zelt 2 lediglich sehr klein ist und die beiden Blitzfangvorrichtungen 10 und 20 ausreichend nahe beieinander stehen, so dass das Zelt in einem durch Blitzfangvorrichtungen 10, 20 gebildetem Schutzvolumen liegt. Bei einem sehr kleinen Zelt ist es grundsätzlich auch denkbar, auf die zweite Blitzfangvorrichtung 20 in Fig. 4 zu verzichten. Dies bedingt aber, dass das Zelt 2 vollständig im Schutzkegel bzw. im Schutzvolumen der ersten Blitzfangvorrichtung 10 angeordnet werden kann. Es ist aber auch möglich, bei der Blitzfanganordnung aus der Fig. 4 wenigstens eine zusätzliche Blitzfangvorrichtung vorzusehen, um das Schutzvolumen zu vergrössern.

Ebenso kann bei den Blitzschutzanordnungen aus den Fig. 7 und 11 auf eines oder mehrere der Fangseile 210, 220, 230, 240, 250, 260 verzichtet werden. In diesem Fall ist aber sicherzustellen, dass das durch die Blitzfangvorrichtungen 10, 20, 30, 40 gebildete Schutzvolumen ausreichend gross ist, um die zu schützenden Objekte vollständig aufzunehmen. Die Anzahl, der Abstand und die Dimensionierung der Blitzfangvorrichtungen 10, 20, 30 ist dabei mit Vorteil entsprechend der Norm IEC/EN 62305-1...4 zu wählen.

Bei der Blitzschutzanordnung aus Fig. 7 ist es auch möglich, mehr als die vier bereits gezeigten Blitzfangvorrichtungen 10, 20, 30, 40 vorzusehen. Dies ist insbesondere bei grösseren Zelten und/oder mehreren Zelten von Vorteil. Entsprechend werden in diesem Fall weiter Fangseile vorgesehen, welche die Blitzfangstangen der Blitzfangvorrichtung miteinander verbinden. Die zentrale Einspeisevorrichtung 400 aus Fig. 7 kann zudem beispielsweise auch eine Vorrichtung zur Messung des Erdwiderstands und/oder ein Fehlerstromschutzschalter (FI) aufweisen. Die Blitzschutzanordnungen müssen zudem nicht alle baugleich sein. So kann beispielsweise anstelle oder zusätzlich zur der zweiten Blitzschutzanordnung 20 aus Fig. 7 auch die Blitzschutzvorrichtung 50 aus Fig. 3 verwendet werden.

Die in den Fig. 4, 5, 6, 8, 11 und 12 dargestellten Zelte 2, 3, 4, 4b und der Vorratstank 800 aus Fig. 11 sind lediglich als Beispiele für zu schützende Objekte zu verstehen. Es ist daher durchaus möglich, anstelle oder zusätzlich zu den vier Zelten 2, 3, 4, 4b und dem Vorratstank 800 andere Objekte wie z. B. Fahrzeuge, Tribünen, Verkaufstände, Container oder Baracken in den Schutzbereichen der Blitzschutzanordnungen vorzusehen. Auch ist es möglich, mehrere und unterschiedlich zu schützende Objekte in einem gemeinsamen Schutzvolumen einer Blitzschutzanordnung vorzusehen.

Bei der fünften Blitzschutzanordnung aus Fig. 12 kann auch auf das Anbringen der Fangstangen 630, 631 verzichtet werden, was aber wie vorstehend ausgeführt nachteilig sein kann, da bei einem Blitzeinschlag das Zelt 4b beschädigt werden kann.

Anstelle von oder zusätzlich zu einzelnen oder sämtlichen Stahldrähten 13.20, 13.21...13.26, 13.20b, 13.21b... 3.26b und/oder weiteren Drähten 13.30, 13.31...13.36, 13.30b, 13.31b...13.36b der Abspannseile aus den Fig. 2 oder 10 können z. B. auch faserbasierte Seile, insbesondere mit Aramid- und/oder Kohlefasern, verwendet werden. Entscheiden ist hierbei, dass zugfesten Fasern verwendet werden.

Es versteht sich zudem, dass bei sämtlichen Blitzschutzanordnungen bei welchen eine oder mehrere elektrische Versorgungsleitungen in das zu schützende Objekt führen, diese über genau eine zentrale Einspeisevorrichtung in das Schutzvolumen geführt werden müssen, wie dies z. B. bei den Fig. 7 und 11 beispielhaft gezeigt ist.

## Patentansprüche

1. Freistehende Blitzschutzanordnung (5, 6, 7) zur Bildung eines Schutzvolumens (300, 301, 302) auf einem Erdoberflächenbereich (1.1) für ein im Schutzvolumen (300, 301, 302) angeordnetes Objekt (2, 3, 4), insbesondere fliegende Bauten, umfassend wenigstens eine elektrisch leitende Blitzfangvorrichtung (10, 50), welche das Objekt (2, 3, 4) überragt und über wenigstens einen Ableiter mit einem Erdbereich (1) elektrisch leitend verbunden ist, **dadurch gekennzeichnet, dass** ein auf dem Erdoberflächenbereich (1.1) aufliegender und geerdeter elektrischer Ringleiter (100, 111, 112, 120) vorgesehen ist, welcher das Objekt (2, 3, 4) in der Art einer Potentialsteuerung umgibt, wobei der Ringleiter (100, 111, 112) mit dem Ableiter elektrisch leitend verbunden ist.

2. Freistehende mobile Blitzschutzanordnung nach Anspruch 1, **dadurch gekennzeichnet, dass** der Ringleiter (100, 111, 112, 120) ein Kupferseil ist, wobei eine elektrisch leitende Querschnittsfläche des Kupferseils insbesondere wenigstens gleich 16 mm² ist.

3. Freistehende mobile Blitzschutzanordnung nach einem der Ansprüche 1 - 2, **dadurch gekennzeichnet, dass** die Blitzfangvorrichtung (10) einen vertikale Mast (11) umfasst, wobei der Mast (11) insbesondere telekopierbar ist, und an einem oberen Ende eine Blitzfangstange (12), bevorzugt in Form eines Aluminiumstabs, angeordnet ist.

4. Freistehende mobile Blitzschutzanordnung nach Anspruch 3, **dadurch gekennzeichnet, dass** die Blitzfangvorrichtung (10) als Ableiter drei mit der Blitzfangstange (12) elektrisch verbundene und elektrisch leitende Abspannseile (13, 14, 15) am wenigstens einen Mast (11) umfasst, wobei die elektrisch leitenden Abspannseile (13, 14, 15) schräg nach unten geführt und vom Mast (11) beabstandet im Erdbereich (1) elektrisch leitend verankert sind.

5. Freistehende mobile Blitzschutzanordnung nach Anspruch 4, **dadurch gekennzeichnet, dass** die elektrisch leitenden Abspannseile (13, 14, 15) einen Kern (13.10) aus Kupfer aufweisen, welcher von verseilten Stahldrähten (13.20... 13.26) umgeben ist, wobei eine elektrisch leitende Querschnittsfläche des Kerns (13.10) aus Kupfer insbesondere wenigstens 10 mm² misst.

6. Freistehende mobile Blitzschutzanordnung nach einem der Ansprüche 1 - 5, **dadurch gekennzeichnet, dass** wenigstens zwei räumlich getrennte Blitzfangvorrichtungen (10, 20) vorliegen.

7. Freistehende mobile Blitzschutzanordnung nach Anspruch 6, **dadurch gekennzeichnet, dass** die wenigstens zwei räumlich getrennten Blitzfangvorrichtungen (10, 20) in einem Bereich eines oberen Endes mit wenigstens einem elektrisch leitenden Fangseil (200), insbesondere einem Kupferseil, elektrisch verbunden sind, wobei bevorzugt das wenigstens eine elektrisch leitende Fangseil (200) in einem Bereich oberhalb des zu schützenden Objekts verläuft.

8. Freistehende mobile Blitzschutzanordnung nach Anspruch 7, **dadurch gekennzeichnet, dass** mehrere Fangseile (210, 220) angeordnet sind, wobei eine grösste Maschenweite von höchstens 20 x 20 m, insbesondere von höchstens 5 x 5 m, vorliegt und wobei bevorzugt die Blitzfangvorrichtung (10) eine Höhe von maximal 10 m, insbesondere von maximal 8 m aufweist.

9. Freistehende mobile Blitzschutzanordnung nach Anspruch 1, **dadurch gekennzeichnet, dass** ein gitterartiges Metallgerüst (600), bestehend aus mehreren miteinander verbundenen Metallstäben (601...626), vorliegt, welches als Blitzfangvorrichtung und Ableiter dient, wobei das Metallgerüst (600) das zu schützende Objekt oberhalb des Erdoberflächenbereichs (1.1) berührungslos und beabstandet umgibt und wobei das Metallgerüst (600) insbesondere einer äusseren Form des zu schützenden Objekts angepasst ist, wobei bevorzugt eine grösste Gittermasche des Gitters höchstens 20 x 20 m, insbesondere höchstens 5 x 5 m, beträgt.

10. Freistehende mobile Blitzschutzanordnung nach einem der Ansprüche 1 - 9, **dadurch gekennzeichnet, dass** eine oder mehrere elektrische Versorgungsleitungen (501.1, 502.1, 503.1), insbesondere Stromversorgungs-, Daten-, Kommunikations- und/oder Antennenleitungen, über genau eine mobile und zentrale Einspeisevorrichtung (400) in das Schutzvolumen geführt werden, wobei die zentrale Einspeisevorrichtung (400) in einem wasserdichten und transportablen Gehäuse über Strom- und/oder Überspannungsschutzvorrichtungen für die elektrischen Versorgungsleitungen (501.1, 502.1, 503.1) verfügt.

11. Bausatz für eine freistehende Blitzschutzanordnung, nach einem der Ansprüche 1-10, **dadurch gekennzeichnet, dass** der Bausatz wenigstens eine frei aufstellbare Blitzfangvorrichtung (10, 20) mit einem Ableiter sowie einen Ringleiter (100) in Form einer elektrisch leitenden Seilschlaufe zur Anordnung auf einem Erdoberflächenbereich (1.1) umfasst.

12. Bausatz nach Anspruch 11, **dadurch gekennzeichnet, dass** er zusätzlich elektrisch leitende und für die wenigstens eine Blitzfangvorrichtung (10, 20) abgelängte Abspannseile (13, 14, 15) enthält, wobei die Abspannseile (13, 14, 15) zur Befestigung an der wenigstens einen Blitzfangvorrichtung (10, 20) und/oder in einem Bodenbereich endseitig angeordnete Verbindungsvorrichtungen (13.1, 14.1, 15.1) aufweisen.

13. Bausatz nach Anspruch 11 oder 12, **dadurch gekennzeichnet, dass** er mehrere Blitzfangvorrichtungen (10, 20) enthält und zusätzlich wenigstens ein konfektioniertes Fangseil (200) zur Verbindung der mehreren Blitzfangvorrichtungen (10, 20) aufweist, wobei das wenigstens eine Fangseil (200) zur Befestigung an den Blitzfangvorrichtungen endseitig angeordnete Befestigungsvorrichtungen (201, 202) aufweist.

14. Bausatz nach einem der Ansprüche 11-13, **dadurch gekennzeichnet, dass** er zusätzlich eine zentrale Einspeisevorrichtung (400) mit Strom- und/oder Überspannungsschutzvorrichtungen umfasst, welche in einem wasserdichten und transportablen Gehäuse mit wenigstens einer Steckerbuchse (401...403) angeordnet ist, wobei das Gehäuse insbesondere mit Traggriffen (404) versehen ist und über eine Erdungsleitung (405) verfügt und bevorzugt zusätzlich Verankerungsmittel, insbesondere Erdanker für die Blitzfangvorrichtung (10, 20) und den Ringleiter, enthält und wobei der Bausatz besonders bevorzugt in einem oder mehreren Transportbehältern vorliegt.

15. Verwendung eines Bausatzes nach einem der Ansprüche 11-14 zum Schutz von Zeltbauten.

## Claims

1. Free-standing lightning protection arrangement (5, 6, 7) for forming a protection volume (300, 301, 302) on a ground surface region (1.1) for an object (2, 3, 4) which is arranged in the protection volume (300, 301, 302), in particular temporary structures, comprising at least one electrically conductive lightning trapping apparatus (10, 50) which projects beyond the object (2, 3, 4) and is electrically conductively connected to a ground region (1) via at least one discharge conductor, **characterized in that** an electrical ring conductor (100, 111, 112, 120) which is situated on the ground surface region (1.1) and is earthed is provided and surrounds the object (2, 3, 4) in the manner of a potential control means, with the ring conductor (100, 111, 112) being electrically conductively connected to the discharge conductor.

2. Free-standing mobile lightning protection arrangement according to Claim 1, **characterized in that** the ring conductor (100, 111, 112, 120) is a copper cable, with an electrically conductive cross-sectional area of the copper cable being, in particular, at least equal to 16 mm².

3. Free-standing mobile lightning protection arrangement according to either of Claims 1 and 2, **characterized in that** the lightning trapping apparatus (10) comprises a vertical mast (11), it being possible for the mast (11) to be, in particular, telescopic, and with a lightning trapping rod (12), preferably in the form of an aluminium bar, being arranged at an upper end.

4. Free-standing mobile lightning protection arrangement according to Claim 3, **characterized in that** the lightning trapping apparatus (10) comprises, as discharge conductors, three electrically conductive stay cables (13, 14, 15), which are electrically connected to the lightning trapping rod (12), on the at least one mast (11), with the electrically conductive stay cables (13, 14, 15) being guided obliquely downwards and being anchored in an electrically conductive manner in the ground region (1) at a distance from the mast (11).

5. Free-standing mobile lightning protection arrangement according to Claim 4, **characterized in that** the electrically conductive stay cables (13, 14, 15) have a copper core (13.10) which is surrounded by stranded steel wires (13.20... 13.26), with an electrically conductive cross-sectional area of the copper core (13.10) measuring, in particular, at least 10 mm².

6. Free-standing mobile lightning protection arrangement according to one of Claims 1-5, **characterized in that** there are at least two physically separate lightning trapping apparatuses (10, 20).

7. Free-standing mobile lightning protection arrangement according to Claim 6, **characterized in that** the at least two physically separate lightning trapping apparatuses (10, 20) are electrically connected to at least one electrically conductive trapping cable (200), in particular a copper cable, in a region of an upper end, with the at least one electrically conductive trapping cable (200) preferably running in a region above the object which is intended to be protected.

8. Free-standing mobile lightning protection arrangement according to Claim 7, **characterized in that** a plurality of trapping cables (210, 220) are provided, with there being a maximum mesh width of at most 20 x 20 m, in particular of at most 5 x 5 m, and with the lightning trapping apparatus (10) preferably having a height of a maximum of 10 m, in particular of a maximum of 8 m.

9. Free-standing mobile lightning protection arrangement according to Claim 1, **characterized in that** there is a grid-like metal frame (600) comprising a plurality of metal bars (601... 626) which are connected to one another, the said metal frame serving as lightning trapping apparatus and discharge conductor, with the metal frame (600) surrounding the object which is intended to be protected without contact and at a distance therefrom above the ground surface region (1.1), and with the metal frame (600) being matched, in particular, to an outer shape of the object which is intended to be protected, with a maximum mesh of the grid being at most 20 x 20 m, in particular at most 5 x 5 m.

10. Free-standing mobile lightning protection arrangement according to one of Claims 1-9, **characterized in that** one or more electrical supply lines (501.1, 502.1, 503.1), in particular power supply lines, data lines, communication lines and/or antenna lines, are routed into the protection volume via exactly one mobile and central feed apparatus (400), with the central feed apparatus (400) having current protection apparatuses and/or overvoltage protection apparatuses for the electrical supply lines (501.1, 502.1, 503.1) in a water-tight and portable housing.

11. Construction kit for a free-standing lightning protection arrangement according to one of Claims 1-10, **characterized in that** the construction kit comprises at least one lightning trapping apparatus (10, 20) which can be freely erected and has a discharge conductor, and also comprises a ring conductor (100) in the form of an electrically conductive cable loop which is to be arranged on a ground surface region (1.1).

12. Construction kit according to Claim 11, **characterized in that** it additionally contains electrically conductive stay cables (13, 14, 15) which are cut to length for the at least one lightning trapping apparatus (10, 20), with the stay cables (13, 14, 15) having connecting apparatuses (13.1, 14.1, 15.1), which are arranged at the ends for the purpose of being attached to the at least one lightning trapping apparatus (10, 20) and/or in a ground region.

13. Construction kit according to Claim 11 or 12, **characterized in that** it contains a plurality of lightning trapping apparatuses (10, 20), and additionally has at least one ready-to-use trapping cable (200) which is intended to connect the plurality of lightning trapping apparatuses (10, 20), with the at least one trapping cable (200) having attachment apparatuses (201, 202) which are arranged at the ends for the purpose of being attached to the lightning trapping apparatuses.

14. Construction kit according to one of Claims 11-13, **characterized in that** it additionally comprises a central feed apparatus (400) having current protection apparatuses and/or overvoltage protection apparatuses which is arranged in a water-tight and portable housing having at least one plug socket (401... 403), with the housing being provided, in particular, with carrying handles (404) and having an earthing line (405) and preferably additionally containing anchoring means, in particular ground anchors for the lightning trapping apparatus (10, 20) and the ring conductor, and with the construction kit particularly preferably being present in one or more transportation containers.

15. Use of a construction kit according to one of Claims 11-14 for protecting tent structures.

## Revendications

1. Arrangement de protection contre la foudre (5, 6, 7) détaché pour former un volume de protection (300, 301, 302) sur une zone de la surface terrestre (1.1) pour un objet (2, 3, 4) disposé dans le volume de protection (300, 301, 302), notamment des bâtiments volants, comprenant au moins un dispositif de captage de la foudre (10, 50) électriquement conducteur qui dépasse de l'objet (2, 3, 4) et qui est relié électriquement avec une zone de terre (1) par le biais d'au moins un paratonnerre, **caractérisé en ce qu'**il est prévu un conducteur électrique annulaire (100, 111, 112, 120) reposant sur la zone de la surface terrestre (1.1) et relié à la terre, lequel entoure l'objet (2, 3, 4) à la manière d'une commande de potentiel, le conducteur annulaire (100, 111, 112) étant relié électriquement avec le paratonnerre.

2. Arrangement de protection contre la foudre mobile détaché selon la revendication 1, **caractérisé en ce que** le conducteur annulaire (100, 111, 112, 120) est un câble en cuivre, une surface de section transversale électriquement conductrice du câble en cuivre étant notamment égale à au moins 16 mm².

3. Arrangement de protection contre la foudre mobile détaché selon l'une des revendications 1 et 2, **caractérisé en ce que** le dispositif de captage de la foudre (10) comprend un mât vertical (11), le mât (11) étant notamment télescopique, et à une extrémité supérieure est disposée une tige de captage de la foudre (12), de préférence sous la forme d'une tige en aluminium.

4. Arrangement de protection contre la foudre mobile détaché selon la revendication 3, **caractérisé en ce que** le dispositif de captage de la foudre (10) comprend comme paratonnerre trois câbles de haubanage (13, 14, 15) sur l'au moins un mât (11) reliés électriquement avec la tige de captage de la foudre (12) et électriquement conducteurs, les câbles de haubanage (13, 14, 15) électriquement conducteurs s'étendant en biais vers le bas et étant ancrés de manière électriquement conductrice à distance du mât (11) dans la zone de la terre (1).

5. Arrangement de protection contre la foudre mobile détaché selon la revendication 4, **caractérisé en ce que** les câbles de haubanage (13, 14, 15) électriquement conducteurs présentent une âme (13.10) en cuivre qui est entourée par des fils en acier (13.20, ..., 13.26) toronnés, une surface transversale électriquement conductrice de l'âme (13,10) en cuivre mesurant notamment au moins 10 mm².

6. Arrangement de protection contre la foudre mobile détaché selon l'une des revendications 1 à 5, **caractérisé en ce qu'**il existe au moins deux dispositifs de captage de la foudre (10, 20) séparés dans l'espace.

7. Arrangement de protection contre la foudre mobile détaché selon la revendication 6, **caractérisé en ce que** les au moins deux dispositifs de captage de la foudre (10, 20) séparés dans l'espace sont reliés électriquement dans une zone d'une extrémité supérieure avec au moins un câble de captage (200) électriquement conducteur, notamment un câble en cuivre, l'au moins un câble de captage (200) électriquement conducteur s'étendant de préférence dans une zone au-dessus de l'objet à protéger.

8. Arrangement de protection contre la foudre mobile détaché selon la revendication 7, **caractérisé en ce que** plusieurs câbles de captage (210, 220) sont disposés, une ouverture de maille la plus grande de 20 x 20 m au maximum, notamment de 5 x 5 m au maximum étant présente et le dispositif de captage de la foudre (10) présentant de préférence une hauteur maximale de 10 m, notamment maximale de 8 m.

9. Arrangement de protection contre la foudre mobile détaché selon la revendication 1, **caractérisé en ce qu'**il existe une structure métallique (600) de type grille, composée de plusieurs barres métalliques (601, ..., 626) reliées entre elles, laquelle sert de dispositif de captage de la foudre et de paratonnerre, la structure métallique (600) entourant l'objet à protéger sans le toucher et à distance au-dessus de la zone de la surface terrestre (1.1) et la structure métallique (600) étant notamment adaptée à une forme extérieure de l'objet à protéger, une maille de grille la plus grande de la grille étant de préférence égale au maximum à 20 x 20 m, notamment au maximum à 5 x 5 m.

10. Arrangement de protection contre la foudre mobile détaché selon l'une des revendications 1 à 9, **caractérisé en ce qu'**une ou plusieurs lignes électriques d'alimentation (501.1, 502.1, 503.1), notamment des lignes d'alimentation électrique, de données, de communication et/ou d'antennes, sont acheminées dans le volume de protection par le biais d'exactement un dispositif d'injection (400) mobile et central, le dispositif d'injection (400) central, dans un boîtier étanche et transportable, disposant de dispositifs de protection contre les surintensités et/ou les surtensions pour les lignes électriques d'alimentation (501.1, 502.1, 503.1).

11. Ensemble de construction pour un arrangement de protection contre la foudre détaché selon l'une des revendications 1 à 10, **caractérisé en ce que** l'ensemble de construction comprend au moins un dispositif de captage de la foudre (10, 20) pouvant être installé librement, comprenant un paratonnerre, ainsi qu'un conducteur annulaire (100) sous la forme d'une boucle de câble électriquement conductrice à disposer sur une zone de la surface terrestre (1.1).

12. Ensemble de construction selon la revendication 11, **caractérisé en ce qu'**il contient en plus des câbles de haubanage (13, 14, 15) électriquement conducteurs et coupés à longueur pour l'au moins un dispositif de captage de la foudre (10, 20), les câbles de haubanage (13, 14, 15) présentant des dispositifs de liaison (13.1, 14.1, 15.1) disposés du côté de l'extrémité pour la fixation à l'au moins un dispositif de captage de la foudre (10, 20) et/ou dans une zone du sol.

13. Ensemble de construction selon la revendication 11 ou 12, **caractérisé en ce qu'**il contient plusieurs dispositifs de captage de la foudre (10, 20) et présente en plus au moins un câble de captage (200) prêt à l'emploi pour relier les plusieurs dispositifs de captage de la foudre (10, 20), l'au moins un câble de captage (200) présentant des dispositifs de fixation (201, 202) disposés du côté de l'extrémité pour la fixation aux dispositifs de captage de la foudre.

14. Ensemble de construction selon l'une des revendications 11 à 13, **caractérisé en ce qu'**il comprend en plus un dispositif d'injection (400) central muni de dispositifs de protection contre les surintensités et/ou les surtensions, lequel est disposé dans un boîtier étanche et transportable muni d'au moins une fiche enfichable (401, ..., 403), le boîtier étant notamment muni de poignées de transport (404) et disposant d'une ligne de mise à la terre (405) et contenant de préférence en plus des moyens d'ancrage, notamment des éléments d'ancrage au sol pour le dispositif de captage de la foudre (10, 20) et le conducteur annulaire, et l'ensemble de construction se trouvant particulièrement de préférence dans un ou plusieurs récipients de transport.

15. Utilisation d'un ensemble de construction selon l'une des revendications 11 à 14 pour protéger des ouvrages en toile de tente.
